Europäisches Patentamt

European Patent Office

Office européen des brevets

(19)

(11) **EP 1 092 305 B1**

(12) **EUROPÄISCHE PATENTSCHRIFT**

(45) Veröffentlichungstag und Bekanntmachung des Hinweises auf die Patenterteilung:
**03.07.2002  Patentblatt 2002/27**

(21) Anmeldenummer: **99920760.8**

(22) Anmeldetag: **15.04.1999**

(51) Int Cl.7: **H04L 27/26**, H04L 1/04, H04L 1/08

(86) Internationale Anmeldenummer:
**PCT/EP99/02752**

(87) Internationale Veröffentlichungsnummer:
**WO 00/11844 (02.03.2000 Gazette 2000/09)**

(54) **METHOD AND APPARATUS FOR SENDING AND RECEIVING INFORMATION SYMBOLS THROUGH MULTIPLE CARRIERS**

VERFAHREN UND VORRICHTUNG ZUM SENDEN UND EMPFANGEN VON INFORMATIONSSYMBOLEN MITTELS EINER MEHRZAHL VON TRÄGERN

PROCEDE ET DISPOSITIF POUR ENVOYER ET RECEVOIR DES SYMBOLES D'INFORMATION AU MOYEN D'UNE PLURALITE DE PORTEUSES

(84) Benannte Vertragsstaaten:
**DE ES FR GB NL**

(30) Priorität: **18.08.1998  DE 19837426**

(43) Veröffentlichungstag der Anmeldung:
**18.04.2001   Patentblatt 2001/16**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder:
• **BADRI, Sabah**
  **D-91058 Erlangen (DE)**
• **EBERLEIN, Ernst**
  **D-91091 Grossenseebach (DE)**
• **BUCHHOLZ, Stephan**
  **D-81447 München (DE)**
• **LIPP, Stefan**
  **D-91058 Erlangen (DE)**
• **HEUBERGER, Albert**
  **D-91056 Erlangen (DE)**
• **GERHÄUSER, Heinz**
  **D-91344 Waischenfeld (DE)**

(74) Vertreter: **Schoppe, Fritz, Dipl.-Ing.**
**Patentanwälte Schoppe, Zimmermann, Stöckeler & Zinkler,**
**Postfach 71 08 67**
**81458 München (DE)**

(56) Entgegenhaltungen:
**EP-A- 0 572 171          DE-A- 19 532 959**
**GB-A- 2 291 314          US-A- 3 665 395**
**US-A- 4 606 047**

**Beschreibung**

Die vorliegende Erfindung bezieht sich auf Systeme für den digitalen Rundfunk und insbesondere auf Systeme für den digitalen Rundfunk, die trotz sich frequenzmäßig und zeitlich ändernder Übertragungskanäle einen zuverlässigen Empfang gewährleisten.

Satellitengestützte Rundfunksysteme liefern lediglich in ländlichen Gebieten eine adäquate Grundversorgung. In dicht bebauten Gebieten, in denen die Satelliten nicht lückenlos empfangbar sind, muß daher zusätzlich ein terrestrisches "Rebroadcasting" eingesetzt werden. Dies bedeutet, daß das Satellitensignal von einem festen auf den Satelliten gerichteten Empfänger empfangen und umgesetzt wird, um über terrestrische Sender wieder abgestrahlt zu werden. Signale dieser terrestrischen Sender können dann von mobilen Empfängern, wie z. B. Autoradios, empfangen werden.

Für den digitalen Rundfunk können Musikstücke oder Sprachsequenzen beispielsweise entsprechend ISO MPEG Layer 3 codiert werden. Solche Redundanz-reduzierenden Codierungsarten begrenzen die erhebliche digitale Informationsmenge, die zu übertragen ist. Ein beispielsweise MPEG-codiertes Stück wird dann vorzugsweise im Sender kanalcodiert, um bereits hier eine gewisse Fehlersicherheit zu erreichen. Algorithmen für die Fehlersicherung umfassen z. B. einen Reed-Solomon-Code und einen Faltungscode. Für die Decodierung des Faltungscodes im Empfänger wird üblicherweise Symbol-by-Symbol-MAP oder der Viterbi-Algorithmus, der nach dem Prinzip der Maximum-Likelihood-Schätzung arbeitet, eingesetzt.

Für das terrestrische Rebroadcasting wird es bevorzugt, größere Städte über ein sogenanntes Gleichwellennetz (SFN; SFN = Single Frequency Network) zu versorgen. Dies bedeutet, daß Gebiete, die mit einem einzelnen Sender nicht versorgt werden können, mittels mehrerer Sender "abgestrahlt" werden, die das identische Signal synchron abstrahlen.

Implementationen eines SFN, sowie der beschriebenen Fehlersicherungscodierungen im Sender und der entsprechenden Decodierungen im Empfänger sind für Fachleute bekannt. Bezüglich verschiedener Kanalcodierungsmöglichkeiten sei beispielsweise auf "Channel Coding with Multilevel/Phase Signals", von Gottfried Ungerboeck, IEEE Transactions on Information Theory, Bd. IT-28, Nr. 1, Seiten 55-66, Januar 1982, verwiesen.

Als Modulation kann bei solchen Systemen eine Mehrträgermodulation oder "Multi-Carrier-Modulation" (MCM) eingesetzt werden. Die Mehrträgermodulation kann beispielsweise durch eine sogenannte OFDM-Modulation (OFDM = Orthogonal Frequency Division Multiplex) implementiert werden.

Bei der OFDM-Modulation wird zunächst aus einem Abschnitt oder Block einer Eingangsbitfolge ein OFDM-Symbol gebildet. Dazu wird eine Bitfolge auf eine andere Zahlenfolge abgebildet. Dieses Abbilden wird in der Technik auch als "Mapping" bezeichnet. Im einfachsten Fall besteht das Mapping darin, daß zwei aufeinanderfolgende Bits der Eingangsfolge zusammengefaßt werden, um ein Dibit, d. h. ein digitales Wort der Länge zwei Bit, zu erhalten. Entsprechend der Anzahl der vorhandenen Träger werden nun so viele digitale Worte parallel gespeichert, wie Träger vorhanden sind. Dieses parallele Anordnen entspricht dem Bilden eines komplexen Spektrums, wobei jedes digitale Wort, d. h. jedes Dibit beim Beispiel, die komplexe Darstellung eines Trägers der Vielzahl von Trägern darstellt. Um dieses Spektrum zu übertragen, wird es mittels einer inversen Fouriertransformation, die als diskrete Fouriertransformation (DFT) oder als schnelle Fouriertransformation (FFT) realisiert ist, in den Zeitbereich transformiert. Das Ergebnis einer Transformation eines Spektrums aus einer Vielzahl von Dibits oder Informationssymbolen wird auch als MCM-Symbol bezeichnet. Dieses MCM-Symbol kann vorzugsweise im Zeitbereich um ein Schutzintervall erweitert werden, damit keine Zwischensymbolstörung (ISS; ISS = Inter Symbol Interference) auftritt. Mehrere MCM-Symbole, zwischen denen jeweils ein Schutzintervall oder "Guard Interval" eingefügt ist, können zu einem MCM-Frame zusammengefaßt werden, der zur Synchronisation des Empfängers mit einer Synchronisationssequenz versehen wird. Der MCM-Frame besteht damit aus mehreren MCM-Symbolen, zwischen denen jeweils ein Schutzintervall vorhanden ist, und einer Synchronisationssequenz. Das Schutzintervall sollte zeitlich so lange bemessen werden, daß in einem SFN-System ein mehrmaliger Empfang von anderen Sendern als dem nächstliegenden Sender, die alle synchron mit der gleichen Frequenz abstrahlen, zu keinem Verlust der Daten führt.

Bezüglich der OFDM-Modulation sei beispielsweise auf die Fachveröffentlichung "Data Transmission by Frequency-Division Multiplexing Using the Discrete Fourier Transform", von S. B. Weinstein u. a., IEEE Transactions on Communication Technolgy, Bd. COM-19, Nr. 5, Seiten 628-634, Oktober 1971, verwiesen. Bezüglich einer OFDM mit Kanalcodierung sei beispielsweise auf die Fachveröffentlichung "COFDM: An Overview", von William Y. Zou u. a., IEEE Transactions on Broadcasting, Bd. 41, Nr. 1, Seiten 1-8, März 1995, verwiesen.

Die Prinzipien der OFDM und der Kanalcodierung für die OFDM mittels Faltungscodes und der Kanaldecodierung mittels dem Viterbi-Algorithmus sind bekannt und in den genannten Veröffentlichungen detailliert dargestellt. Diese Aspekte müssen hier daher nicht eingehend erläutert werden.

Problematisch bei Mehrträgerübertragungssystemen (CM), zu denen auch die OFDM-Systeme gehören, ist die Tatsache, daß viele Träger bei einer Übertragung von Informationen über Mehrwegekanäle (nahezu) vollständig ausgelöscht werden können. Die Informationen, die über diese Träger übertragen werden, stehen somit am Empfänger nicht mehr zur Verfügung und können, wenn überhaupt, nur noch durch eine leistungsfähige Kanalcodierung wiedergewonnen werden.

Störungen des nicht idealen Übertragungskanals können beispielsweise in einem zusätzlichen Gauß-sehen weißen Rauschen (AWGN; AWGN = Additive White Gaussian Noise), einer zeitabhängigen erhöhten Dämpfung des Übertragungskanals beispielsweise während des Fahrens im "Schatten" eines Hochhauses, einem frequenzselektiven Übertragungskanal, d. h. bestimmte Frequenzen werden stärker gedämpft als andere Frequenzen, oder (meistens) in einer Kombination der genannten Phänomene bestehen. Weiterhin finden aufgrund der üblicherweise stark inhomogenen Topologie des Übertragungskanals, d. h. viele Bauwerke in einer Stadt, Reflexionen statt, die bei entsprechenden Laufzeitverhältnissen, wie es bereits erwähnt wurde, zu konstruktiven aber auch destruktiven Interferenzen führen werden. Diese Situation verschärft sich noch dadurch, daß zusätzlich zu dem Mehrwegeempfang, der aufgrund der unterschiedlichen Übertragungswege vorhanden ist, in einem SFN-System systembedingt Signale von anderen Sendern empfangen werden, die synchron zu einem bezüglich des Empfängers dominierenden Sender senden. Signale solcher Nebensender werden längere Laufzeiten zum Empfänger haben, ihre Amplituden können jedoch aufgrund konstruktiver Interferenzen durchaus in den Bereich der Empfangsamplitude vom dominierenden Sender kommen, besonders wenn derselbe seinerseits durch eine destruktive Interferenz stark gedämpft ist.

Das US-Patent Nr. 4,606,047 bezieht sich auf ein HF-Kommunikationsmodem, das sowohl Frequenz- als auch Zeit-Diversity verwendet, um Übertragungsprobleme aufgrund von Rauschen, Mehrwegausbreitungen, usw. zu überwinden. Ein digital codiertes Signal wird aufeinanderfolgend in fünf komplementären Zwei-Ton-Kanälen übertragen, wobei immer der erste Ton eines Kanals, d.h. der erste Träger eines Kanals, das aktuell zu sendende Bit trägt, während der zweite Ton des Kanals den komplementären Zustand des ersten Kanals überträgt. In jedem Kanal werden das Sendebit sowie das dazu komplementäre Bit gleichzeitig übertragen, wobei die Übertragung in den fünf Kanälen zeitversetzt stattfindet.

Die EP 0 572 171 A1 bezieht sich auf ein Verfahren und eine Vorrichtung zum Liefern von Zeit-Diversity für Kanäle, die einem Mehrwegschwund unterliegen. Ein digitales Signal wird kanalcodiert, um eines oder mehrere Symbole zu erzeugen. Hierauf wird eine Mehrzahl von Symbolkopien hergestellt, wobei jede Kopie durch eine festgelegte zeitlich variierende Funktion gewichtet wird. Die gewichteten Symbolkopien werden dann jeweils von unterschiedlichen Sendeschaltungen verarbeitet und von mit denselben verbundenen Antennen übertragen. Die Gewichtung der Symbole mittels der festgelegten zeitlich variierenden Funktion umfaßt eine Veränderung der Amplitudenverstärkung, der Phasenverschie- bung oder sowohl der Amplitudenverstärkung als auch der Phasenverschiebung. Die gewichteten Kopien eines Symbols werden gleichzeitig übertragen. Sog. "Deep Fades" werden dadurch überwunden, daß durch die Gewichtung mit dem zeitlich variierenden Signal andere Phasen/Amplituden-Verhältnisse eingeführt werden, die zwar ebenso zu einer destruktiven Interferrenz führen können, die aufgrund der Gewichtung auftrifft, die jedoch die beiden interferierenden Signale derart verändert, daß die "Deep Fades" nicht mehr "statisch" sind, sondern lediglich während eines bestimmten Teils der zeitlich variierenden Gewichtungsfunktionen auftreten.

Die Aufgabe der vorliegenden Erfindung besteht darin, ein Konzept für einen digitalen Rundfunk zu schaffen, das eine fehlersichere Übertragung ermöglicht, selbst wenn der Übertragungskanal gestört ist.

Diese Aufgabe wird durch ein Verfahren zum Senden von Informationssymbolen nach Anspruch 1 oder 2, durch ein Verfahren zum Empfangen von Informationssymbolen nach Anspruch 11, durch eine Vorrichtung zum Senden von Informationssymbolen nach Anspruch 20 und durch eine Vorrichtung zum Empfangen von Informationssymbolen nach Anspruch 30 gelöst.

Der vorliegenden Erfindung liegt die Erkenntnis zugrunde, Informationen dadurch zu schützen, daß sie zwei oder mehrmals übertragen werden. Wenn ein Träger zu einem bestimmten Zeitpunkt stark gestört oder sogar gelöscht ist, existiert immer noch die Möglichkeit, die gleichen Informationen von diesem Träger zu einem späteren Zeitpunkt wiederzugewinnen, wenn die Informationen zu einem späteren Zeitpunkt noch einmal bzw. zu mehreren späteren Zeitpunkten erneut gesendet werden. Am effektivsten arbeitet das erfindungsgemäße Konzept dann, wenn die Informationen beim zweiten Mal nicht über den gleichen Träger sondern über einen anderen Träger erneut gesendet werden. Liegt die Kanalstörung nämlich nicht nur in einer vorübergehenden zeitlichen Störung, sondern in einer länger andauernden Störung bestimmter Träger durch destruktive Interferenz, so können die gestörten Informationen in den Trägern, die nahezu ausgelöscht sind, von anderen Trägern, die nicht besonders gestört sind bzw. sogar durch konstruktive Interferenz verstärkt worden sind, wiedergewonnen werden. Dies führt zu einem "Diversity-Effekt".

Erfindungsgemäß wird diese Mannigfaltigkeit oder Diversität durch eine Vergrößerung der Signalkonstellation erreicht, weshalb sie "Mapping Diversity" genannt wird. Wenn beispielsweise eine QPSK, d. h. eine quaternäre Phasenumtastung, betrachtet wird, besteht die Signalkonstellation aus vier unterschiedlichen Phasenwerten, mittels derer Informationen übertragen werden können. Bei einer QPSK hat jeder Phasenzeiger die gleiche Amplitude, die z. B. 1 oder 1,41 (Betrag des Realteils = Betrag des Imaginärteils = 1) betragen kann. Wie es noch weiter hinten detaillierter beschrieben werden wird, führt eine Vergrößerung der Signalkonstellation gemäß der vorliegenden Erfindung zu einer Gewichtung der Amplitude eines Zeigers, d. h. daß ein erstes Sendesymbol, das auf einem Informationssymbol basiert, eine erste Amplitude hat, während ein zweites Sendesymbol, das auf demselben Informationssymbol basiert, jedoch zu einem späteren Zeitpunkt gesendet wird, eine andere Amplitude hat. Erfindungsgemäß werden daher Informationen nicht nur zweimal gesendet, sondern auch mittels unterschiedlicher Informationssymbole, die in der vergrößerten Signalkonstellation liegen, wobei im Unterschied der Sendesymbole jedoch keine Nutzinformation codiert ist, weshalb die Bitbandbreite des Systems durch dieses Verfahren nicht erhöht wird.

Erfindungsgemäß kann ein Empfänger, der ebenfalls die vergrö-Berte Signalkonstellation kennt, aufgrund der beiden zu unterschiedlichen Zeitpunkten empfangenen Sendesymbole, die sich auf dasselbe Informationssymbol beziehen, und aufgrund der Unterschiedlichkeit der empfangenen Sendesymbole mittels einer Kanaldecodierung zuverlässig die gesendeten Informationssymbole wiedergewinnen.

Die bevorzugte Modulationsart ist die Differenzphasenumtastung, die prinzipiell mit einer beliebigen Anzahl von Phasenzuständen implementiert sein kann (DMPSK), die jedoch bei einem bevorzugten Ausführungsbeispiel als DQPSK, d. h. mit vier Phasenzuständen oder Phasenzeigerstellungen, implementiert ist. Für einen kohärenten Empfang wird bei jedem empfangenen Informationssymbol die Phase gesehätzt. Die Differenz-Decodierung, d. h. das Bilden der Phasendifferenz zwischen zwei aufeinanderfolgenden empfangenen Sendesymbolen, kann dann durch einen einfachen Subtrahiervorgang durchgeführt werden. Nachteilig an diesem Konzept ist der erhöhte Hardwareaufwand für die Phasenschätzung. Vorteilhaft ist jedoch ein hoher Empfangsgewinn.

Beim inkohärenten Empfang, der keine Phasenschätzung benötigt und daher hardwaremäßig einfacher ist, der aber bei nichtmobilem Empfang einen etwa um 3 dB geringeren Empfangsgewinn als der kohärente Empfänger hat, wird zur Differenz-Decodierung das aktuelle empfangene Sendesymbol mit dem konjugiert komplexen Wert des zuletzt empfangenen Sendesymbols multipliziert. Bei mobilem Empfang ist der Empfangsgewinn geringer, da die Phasen z. B. aufgrund von Doppler-Verschiebungen nicht so korrekt geschätzt werden kann. Das Ergebnis dieser komplexen Multiplikation besteht in der Multiplikation der Beträge und in der Subtraktion der Phasen der beiden Multiplikanden. In der Phasendifferenz steckt die erwünschte Nutzinformation. Bei der Kanaldecodierung im Empfänger wird jedoch auch die Amplitude dieses Multiplikationsergebnisses benötigt. Da zwei kleine Amplituden miteinander mulitpliziert werden, ist die Amplitude des Ergebnisses typischerweise eine noch kleinere Zahl. Kleine Amplituden führen jedoch, wie es durch eine Betrachtung der Signalkonstellation ersichtlich ist, zu einer immer schlechteren Entscheidungszuverlässigkeit. Erfindungsgemäß wird daher keine harte Entscheidung sondern eine "weiche" Entscheidung mittels der sogenannten "Log-Likelihood-Ratios" durchgeführt, um die Decodiererzuverlässigkeit zu erhöhen.

Bevorzugte Ausführungsbeispiele der vorliegenden Erfindung werden nachfolgend bezugnehmend auf die beigelegten Zeichnungen detaillierter erläutert. Es zeigen:

Fig. 1      ein Signalkonstellationsdiagramm für ein Beispiel einer erfindungsgemäß erweiterten Signalkonstellation;

Fig. 2      ein Signalkonstellationsdiagramm für ein weiteres Beispiel einer erfindungsgemäß erweiterten Signalkonstellation;

Fig. 3      ein Signalkonstellationsdiagramm für eine übliche Phasenumtastung bzw. Differenz-Phasenumtastung;

Fig. 4      ein Prinzipschaltbild für eine Phasenumtastung mit Differenzcodierung;

Fig. 5      ein Sender für Informationssymbole gemäß einem bevorzugten Ausführungsbeispiel der vorliegenden Erfindung;

Fig. 6      ein Blockschaltbild zum Berechnen der Zuverlässigkeitsmetrik für die DQPSK-Modulation von Fig. 4;

Fig. 7      ein Blockschaltbild eines erfindungsgemäßen Empfängers, der eine kohärente Decodierung implementiert;

Fig. 8      ein Blockschaltbild eines erfindungsgemäßen Empfängers, der eine inkohärente Decodierung implementiert;

Fig. 9      ein Prinzipdiagramm zur Veranschaulichung der erfindungsgemäßen Metrikberechnung;

Fig. 10     ein Blockschaltbild zur Implementation der Soft-Metrik-Berechnung;

Fig. 11     ein detaillierteres Blockschaltbild für einen Teil des Senders von Fig. 5; und

Fig. 12     ein detaillierteres Blockschaltbild für einen Teil des Empfängers von Fig. 7.

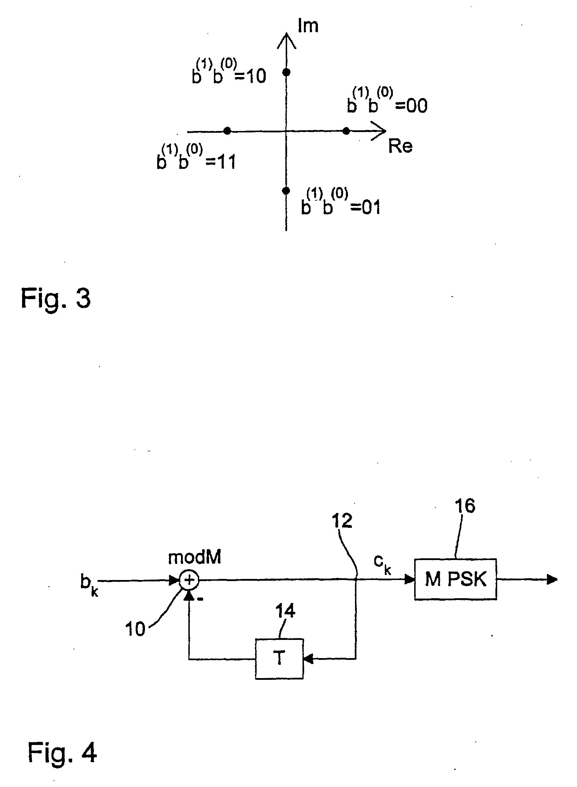

Zur Herleitung der erfindungsgemäßen Signalkonstellationen wird im nachfolgenden auf Fig. 3 Bezug genommen, die ein Signalkonstellationsdiagramm für eine übliche QPSK- oder DQPSK-Abbildung (DQPSK = Differential Quaternary Phase Shift Keying) zeigt. Das Signalkonstellationsdiagramm umfaßt vier Phasenzustände, die durch zwei Bits, b(1) und b(0), dargestellt werden können. Aus Fig. 3 ist zu sehen, daß das binäre Wort 00 einer Phase von 0 Grad entspricht, daß das binäre Wort 01 einer Phase von 90 Grad ($\pi/2$) entspricht, daß das binäre Wort 11 einer Phase von 180 Grad ($\pi$) entspricht, und daß das binäre Wort 10 einer Phase von 270 Grad ($3/2\pi$) entspricht. Daraus ist ersichtlich, daß in Fig. 3 wie in der gesamten vorliegenden Anmeldung eine Winkeldrehungskonvention im Uhrzeigersinn verwendet wird, die im Gegensatz zur trigonometrischen Winkeldrehung steht, die bekannterweise gegen den Uhrzeigersinn gerichtet ist.

Das Signalkonstellationsdiagramm von Fig. 3 kann sowohl für eine übliche Phasenumtastung als auch für eine Differenz-Phasenumtastung verwendet werden.

Fig. 4 zeigt ein Prinzipblockschaltbild zur Implementation einer Differenz-Phasenumtastung mit einer Anzahl M von Phasenzuständen (MPSK). Ein digitales Wort bk zu einem Zeitpunkt k, das im allgemeinen Fall eine beliebige Anzahl von Bits haben kann, das bei der beschriebenen Implementation jedoch lediglich zwei Bits hat, um einen der in Fig. 3 gezeigten Phasenzustände darstellen zu können, wird in einen Summierer 10 eingespeist, der als ModM-Summierer ausgeführt ist. Dies bedeutet, daß das Ausgangssignal des Summierers immer eine Phase ergibt, die kleiner als 360 Grad ist. Dem Summierer nachgeschaltet ist eine Verzweigungsstelle 12, an der das Signal $b_k$ zum Zeitpunkt k abgezweigt und in eine Verzögerungseinrichtung T 14 eingespeist wird, wo bk eine Periode verzögert wird. Im nächsten Zyklus wird ein neues $b_k$ in den Summierer 10 eingespeist, und das bk des letzten Zyklus, das nun als $b_{k-1}$ bezeichnet wird, wird von $b_k$ subtrahiert, um die Differenzphase zu erhalten, die durch $c_k$ bezeichnet ist. $c_k$ ist daher ein binäres Wort mit einer beliebigen Anzahl von Bits, deren Anzahl der Bitanzahl von bk entspricht, wobei diesem Bitwort $c_k$ nun in einem Block MPSK 16 ein Phasenwert zugeordnet wird. Obwohl bereits bei den Symbolen $b_k$ bzw. $b_{k-1}$ bzw. $c_k$ von "Phasen" gesprochen wurde, stellen diese Symbole lediglich Bitworte dar, denen erst durch den Block MPSK 16 bestimmte Phasenwerte zugeordnet werden.

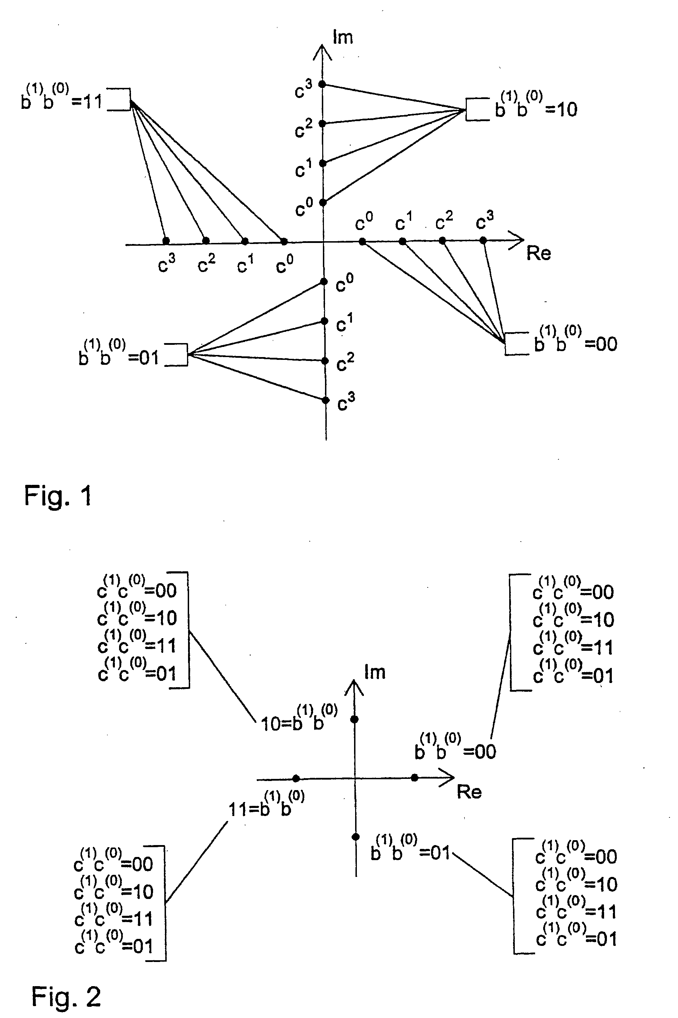

Im nachfolgenden wird auf Fig. 1 Bezug genommen, die eine erfindungsgemäß erweiterte Signalkonstellation wiedergibt. Jedes Symbol b(1) b(0) wird mit vier möglichen Amplitudenfaktoren c(i), i aus {0, 1, 2, 3}, gewichtet. Damit ergeben sich insgesamt 16 Möglichkeiten für die Signalkonstellation, die in Fig. 1 gezeigt ist. Diese Signalkonstellation ähnelt einer differenziellen Amplituden- und Phasen-Modulation (DAPSK), unterscheidet sich jedoch von einer echten DAPSK dadurch, daß durch die Amplitudenfaktoren c(i) keine Nutzinformationen übertragen werden, sondern daß durch verschiedene Amplitudengewichtungen c(i) unterschiedliche Sendesymbole erzeugt werden, die aber alle die gleiche Nutzinformation haben, die durch b(1) b(0) dargestellt ist. Die nachfolgende Tabelle 1 zeigt die verschiedenen Möglichkeiten.

Tabelle 1

| $c^{(i)}b^{(1)}b^{(0)}, \varphi = 0$ | $c^{(i)}b^{(1)}b^{(0)}, \varphi = \frac{\pi}{2}$ | $c^{(i)}b^{(1)}b^{(0)}, \varphi = \pi$ | $c^{(i)}b^{(1)}b^{(0)}, \varphi = \frac{3\pi}{2}$ |
|---|---|---|---|
| $c^{(0)}00$ | $c^{(0)}10$ | $c^{(0)}11$ | $c^{(0)}01$ |
| $c^{(1)}00$ | $c^{(1)}10$ | $c^{(1)}11$ | $c^{(1)}01$ |
| $c^{(2)}00$ | $c^{(2)}10$ | $c^{(2)}11$ | $c^{(2)}01$ |
| $c^{(3)}00$ | $c^{(3)}10$ | $c^{(3)}11$ | $c^{(3)}01$ |

Fig. 2 zeigt ein weiteres Beispiel für eine erfindungsgemäße Vergrößerung der Signalkonstellation. Jedes Symbol (b(1) b(0)) wird mit vier möglichen Symbolen (c(1), c(0)) = {(00), (01), (11), (10)} gewichtet. Damit ergeben sich folgende Möglichkeiten für die einzelnen Informationssymbole b(1) b(0):

- $(b^{(1)}\ b^{(0)})$= **{00}**

| $(b^{(1)}\ b^{(0)}\ c^{(1)}\ c^{(0)})$ 0000 | $(b^{(1)}\ b^{(0)}\ c^{(1)}\ c^{(0)})$ 0010 | $(b^{(1)}\ b^{(0)}\ c^{(1)}\ c^{(0)})$ 0011 | $(b^{(1)}\ b^{(0)}\ c^{(1)}\ c^{(0)})$ 0001 |
|---|---|---|---|

- $\{b^{(1)}\ b^{(0)}\}$ = **{01}**

| $(b^{(1)}\ b^{(0)}\ c^{(1)}\ c^{(0)})$ 0100 | $(b^{(1)}\ b^{(0)}\ c^{(1)}\ c^{(0)})$ 0110 | $(b^{(1)}\ b^{(0)}\ c^{(1)}\ c^{(0)})$ 0111 | $(b^{(1)}\ b^{(0)}\ c^{(1)}\ c^{(0)})$ 0101 |
|---|---|---|---|

- $\{b^{(1)}b^{(0)}\}$=**{11}**

| $(b^{(1)} \, b^{(0)} \, c^{(1)} \, c^{(0)})$ | $(b^{(1)} \, b^{(0)} \, c^{(1)} \, c^{(0)})$ | $(b^{(1)} \, b^{(0)} \, c^{(1)} \, c^{(0)})$ | $(b^{(1)} \, b^{(0)} \, c^{(1)} \, c^{(0)})$ |
|---|---|---|---|
| 1100 | 1110 | 1111 | 1101 |

- $\{b^{(1)} \, b^{(0)}\} = \mathbf{\{10\}}$

| $(b^{(1)} \, b^{(0)} \, c^{(1)} \, c^{(0)})$ | $(b^{(1)} \, b^{(0)} \, c^{(1)} \, c^{(0)})$ | $(b^{(1)} \, b^{(0)} \, c^{(1)} \, c^{(0)})$ | $(b^{(1)} \, b^{(0)} \, c^{(1)} \, c^{(0)})$ |
|---|---|---|---|
| 1000 | 1010 | 1011 | 1001 |

Die nachfolgende Tabelle 2 faßt diese Ergebnisse noch einmal zusammen. Es ist zu sehen, daß die vier Möglichkeiten zur Phasencodierung durch das Informationssymbol, das zwei Bit b(1), b(0) aufweist, auf 16 Möglichkeiten erweitert worden sind.

Tabelle 2

| $(b^{(1)} \, b^{(0)} \, c^{(1)} \, c^{(0)})$ | $(b^{(1)} \, b^{(0)} \, c^{(1)} \, c^{(0)})$ | $(b^{(1)} \, b^{(0)} \, c^{(1)} \, c^{(0)})$ | $(b^{(1)} \, b^{(0)} \, c^{(1)} \, c^{(0)})$ |
|---|---|---|---|
| 0000 | 0010 | 0011 | 0001 |
| 1000 | 1010 | 1011 | 1001 |
| 1100 | 1110 | 1111 | 1101 |
| 0100 | 0110 | 0111 | 0101 |

An dieser Stelle sei darauf hingewiesen, daß die erfindungsgemäße Erweiterung der Signalkonstellation nicht auf eine differenzielle Phasenumtastung begrenzt ist, sondern daß jedes beliebige Modulationsverfahren, z. B. eine Quadraturamplitudenmodulation (QAM), eine Phasenumtastung (PSK), eine Amplituden-Phasenumtastung (APSK) oder eine differenzielle Amplituden-Phasenumtastung (DAPSK), erfindungsgemäß erweitert werden kann, derart, daß ein zweites Sendesymbol aufgrund eines Informationssymbols erzeugt werden kann, das sich von einem ersten Sendesymbol unterscheidet, das ebenfalls auf dasselbe Informationssymbol bezogen ist. Wesentlich ist, daß die Vergrößerung der Signalkonstellation nicht dazu verwendet wird, mehr Informationen zu übertragen, sondern die gleichen Informationen noch mindestens einmal mehr zu übertragen. Dies bedeutet, daß bezugnehmend auf Fig. 1 in den unterschiedlichen Amplituden, die durch die unterschiedlichen Gewichtungsfaktoren c(i) erzeugt werden können, keine Nutzinformation steckt. Die unterschiedlichen Amplituden werden von der Kanal-Decodierung verwendet, um zuverlässige Bitentscheidungen treffen zu können. Im Gegensatz zu dem erneuten Senden zweier identischer Informationssymbole erlaubt die erfindungsgemäß erweiterte Signalkonstellation am Empfänger z. B. die Unterscheidung der zwei Sendesymbole. Allgemein gesagt liefert die erfindungsgemäß erweiterte Signalkonstellation Flexibilität bezüglich der Gestaltung der Sendesymbole. Zur Übertragung der Nutzinformationen werden beim erfindungsgemäßen Verfahren weiterhin lediglich die Bits der Informationssymbole verwendet. Damit wird die Übertragungsbandbreite des Systems nicht beeinträchtigt.

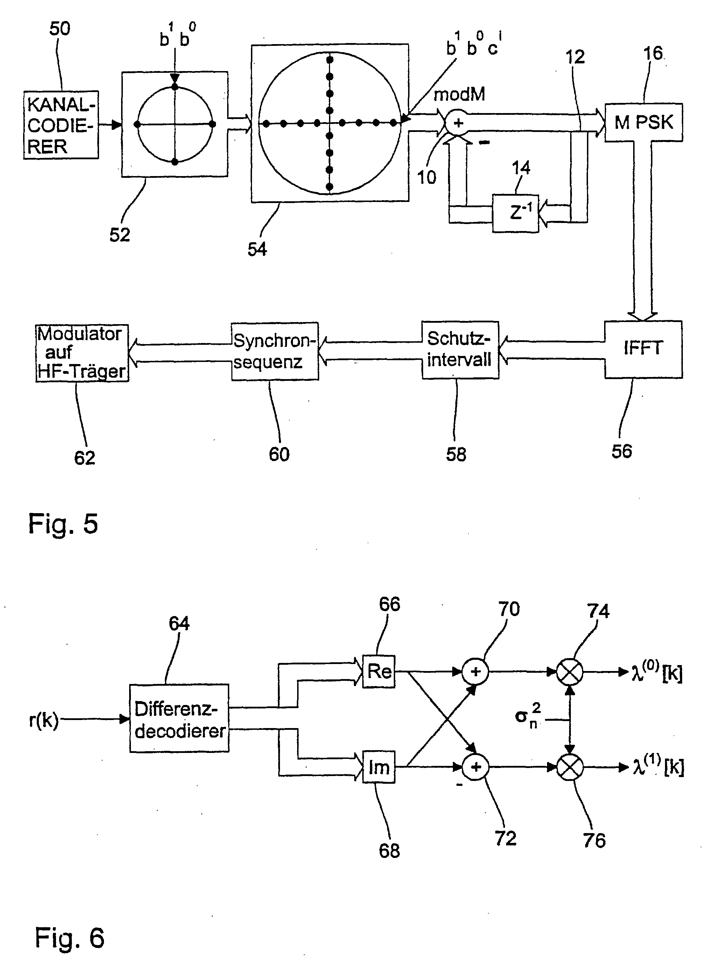

Fig. 5 zeigt in Blockschaltbildform ein bevorzugtes Ausführungsbeispiel eines Senders gemäß der vorliegenden Erfindung. Ein Kanalcodierer 50 führt im Stand der Technik bekannte Kanalcodierungsverfahren, die auf einem Faltungscode oder ähnlichem aufbauen, durch und liefert Bits zu einer ersten Einrichtung 52 zum Gruppieren von Bits, um Informationssymbole b(1) b(0) zu erzeugen. Die Gruppierung von zwei Bit b(1) b(0) führt dazu, die vier Phasenzustände des Signalkonstellationsdiagramm, das in Fig. 3 gezeigt ist, darstellen zu können. Die Einrichtung zum Gruppieren von Bits, um Informationssymbole zu erzeugen, wird auch als "erster Mapper" bezeichnet. Dem ersten Mapper 52 nachgeschaltet findet sich ein zweiter Mapper 54, der die erfindungsgemäße Erweiterung der Signalkonstellation zu einer erweiterten Signalkonstellation, wie sie in Fig. 1 dargestellt ist, durchführt. Selbstverständlich könnte der zweite "Mapper" auch die erweiterte Signalkonstellation implementieren, die in Fig. 2 dargestellt ist. Der zweite Mapper 54 stellt also eine Einrichtung zum Gewichten der von der Einrichtung 52 zum Gruppieren erzeugten Informationssymbole dar. Die beiden Einrichtungen 52 und 54 bilden somit zusammen eine Einrichtung zum Erzeugen eines ersten und eines zweiten Sendesymbols aufgrund eines einzigen Informationssymbols, wobei sich das erste und das zweite Sendesymbol voneinander unterscheiden. Beide Informationssymbole werden durch die Gewichtungseinrichtung 54 gewichtet und zwar mit zwei unterschiedlichen Faktoren c(i). Am Ausgang der Einrichtung zum Gewichten 54 liegen somit zu unterschiedlichen Zeitpunkten unterschiedliche Sendesymbole an, die sich jedoch auf dasselbe Informationssymbol b(1) b(0) beziehen.

Bei einem bevorzugten Ausführungsbeispiel der vorliegenden Erfindung wird dann eine Differenzcodierung zweier zeitlich benachbarter Sendesymbole durchgeführt, wie sie bereits bezugnehmend auf Fig. 4 beschrieben wurde. Es ist jedoch offensichtlich, daß das erfindungsgemäße Verfahren zum Senden ebenso wie das erfindungsgemäße Verfahren zum Empfangen auch ohne Differenzcodierung ausgeführt werden können, wobei in diesem Fall die Elemente 10, 12, 14 nicht vorhanden sind.

Bei einer Implementation der vorliegenden Erfindung wird eine Multiträgermodulation mit einer Anzahl von 512 Trägern verwendet. Diese Multiträgermodulation wird, wie es bereits eingangs erwähnt wurde, mit einer inversen Fouriertransformation bewirkt, die durch einen Block IFFT 56 in Fig. 5 symbolisch dargestellt ist. Dazu erzeugen die Einrichtungen 50 bis 54 und 10 bis 16 512 Sendesymbole bzw. Differenzsymbole, die dann parallel mittels des Blocks IFFT in den Zeitbereich transformiert werden, um ein MCM-Symbol zu erhalten, das am Ausgang des Blocks IFFT 56 ausgegeben wird. Zur Vermeidung einer Interferenz zweier benachbarter MCM-Symbole bei Verwendung eines SFN-Systems wird zwischen jedem MCM-Symbol ein Schutzintervall oder "Guard Interval" eingefügt, wie es durch einen Block 58 symbolisch dargestellt ist. Zur Fertigstellung eines vollständigen MCH-Frames wird nach einer bestimmten Anzahl von MCM-Symbolen, zwischen denen Schutzintervalle angeordnet sind, eine Synchronisationssequenz, die auch als AMSS bezeichnet wird, eingefügt, wie es durch einen Block 60 angedeutet ist. Eine fertige Synchronisationssequenz wird dann mittels eines komplexen IQ-Modulators auf einen Hochfrequenz-Träger moduliert und dann z. B. über eine Antenne abgestrahlt. Dies ist symbolisch durch einen Block 62 dargestellt. Es sei darauf hingewiesen, daß die Verarbeitung einer Synchronisationssequenz bis zur Abstrahlung durch eine Antenne bekannt ist und daher nicht näher beschrieben werden braucht.

Wie es bereits erwähnt wurde, wird vorzugsweise eine IFFT 56 im Sender bzw. eine FFT im Empfänger mit 512 Trägern verwendet. Der Block IFFT 56 gibt somit aufgrund der parallelen Funktionsweise der schnellen Fouriertransformation 512 komplexe Zeitpunkte parallel aus, die ein MCM-Symbol bilden. Ein MCM-Frame besitzt beispielsweise eine Dauer von 6 ms. Er besteht, wie es erwähnt wurde, beispielsweise aus 24 MCM-Symbolen, zwischen denen jeweils ein Schutzintervall eingebracht ist, dessen Länge bei einem bevorzugten Ausführungsbeispiel etwa 25% der Länge eines MCM-Symbols beträgt. Die Synchronisationssequenz umfaßt ferner beispielsweise 396 Bit. Somit kann ein Frame bei einem bevorzugten Ausführungsbeispiel der Erfindung 16.396 Bit umfassen.

Erfindungsgemäß werden somit aus einem Informationssymbol zwei voneinander unterschiedliche Sendesymbole erzeugt, die zu unterschiedlichen Zeitpunkten gesendet werden. Wenn beispielsweise eine Kanalstörung vorliegt, die zeitlich vorübergehend ist, und die alle Träger gleichermaßen betrifft, so kann bereits ein Gewinn erzielt werden, wenn das zweite Sendesymbol zu einem Zeitpunkt $k_2$ erneut gesendet wird, der um die Dauer der Störung von dem Zeitpunkt $k_1$ zeitlich entfernt ist, zu dem das erste Sendesymbol gesendet wurde. In Anbetracht der hauptsächlich auftretenden zeitlichen Störungen wird eine Differenzzeit zwischen dem Senden der beiden Sendesymbole von etwa 5 MCM-Frames, was bei dem beschriebenen Beispiel etwa 30 ms entspricht, sinnvoll sein. Auch bei kürzeren Zeitdauern wird jedoch bereits ein - unter Umständen kleinerer - Gewinn erzielt, wenn zeitliche Störungen des Kanals kürzer sind. Wenn die zeitliche Störung des Übertragungskanals alle Träger gleichermaßen betrifft, spielt es keine Rolle, ob das zweite Sendesymbol mittels genau des gleichen Kanals übertragen wird, über den das erste Sendesymbol übertragen wurde. In der Praxis treten jedoch oft Interferenzen auf, die zu einer Auslöschung oder aber zu einer Verstärkung von einzelnen Trägern führen können. Es empfiehlt sich daher, das zweite Sendesymbol nicht über den gleichen Träger zu übertragen, sondern über einen anderen Träger. Dann besteht die Hoffnung, daß, wenn das erste Sendesymbol auf einen Träger moduliert wurde, der einer destruktiven Interferenz ausgesetzt war, das zweite Sendesymbol auf einen Träger moduliert ist, der durch eine konstruktive Interferenz sogar noch gegenüber normal übertragenen Trägern verstärkt worden ist.

Ferner wird bevorzugt, Informationen nicht nur zweimal zu senden, sondern abhängig vom Kanal mehr als zweimal. Wenn der Kanal relativ schlecht ist, wird ein erneutes Senden eines Informationssymbols häufiger nötig sein, als wenn ein relativ störungsarmer Kanal vorliegt. Das Signalkonstellationsdiagramm, das in Fig. 1 oder auch in Fig. 2 dargestellt ist, erlaubt ein vierfaches Senden der gleichen Informationen. In Analogie zu dem Fall des doppelten Sendens werden dann vier Sendesymbole erzeugt, die alle auf dem gleichen Informationssymbol basieren, die jedoch untereinander unterschiedlich sind. In diesem Fall bietet sich folgendes Trägerraster an. Wenn das erste Sendesymbol über den ersten Träger übertragen worden ist, könnte das zweite Sendesymbol über den 32. Träger übertragen werden, könnte das dritte Sendesymbol über den 128. Träger übertragen werden, und könnte das vierte Sendesymbol über den 256 Träger übertragen werden. Andere Frequenzraster sind jedoch ebenfalls denkbar. Vorzugsweise werden die Sendesymbole, die alle auf dem gleichen Informationssymbol basieren, gleichmäßig über das Frequenzraster verteilt gesendet, da dann die Wahrscheinlichkeit am höchsten ist, daß zumindest einmal ein Kanal getroffen wird, der nicht durch eine destruktive Interferenz oder eine andere Störung außerordentlich stark gedämpft ist.

Bezüglich der Amplitudengewichtungen bei der Signalkonstellation von Fig. 1 werden Gewichtungsfaktoren $c(i)$ von {0,18, 0,35, 0,53, 0,71} verwendet. Damit wird eine nahezu maximale Ausnutzung des verfügbaren Amplitudenbereichs von 0 bis 1 gestattet.

Im nachfolgenden wird auf Fig. 6 eingegangen, die die Implementation einer Soft-Metrik-Berechnung für einen Empfänger für digitale Signale umfaßt. Die nachfolgenden Metrixbetrachtungen beziehen sich alle auf eine DPSK. Analoge Metrikbetrachtungen für andere Modulationsverfahren sind jedoch in Anbetracht der vorliegenden Ausführungen ableitbar.

Die Sendesymbole lassen sich als s(k) = e^{jφ[ k ]} darstellen, wobei φ[k] die absolute Phase ist. Sendeseitig läßt sich das aktuelle Sendesymbol folgendermaßen schreiben:

$$s(k) = s(k-1) \cdot e^{j\varphi[k]} = e^{+j(\phi[k-1]+\varphi[k])} \qquad \text{(Gl. 1)}$$

Die Nutzinformationen sind in Gleichung 1 im differenziellen Phasenterm φ[k] repräsentiert. Die Empfangssymbole lassen sich wie folgt ausdrücken:

$$r(k) = H\left(e^{j\frac{2\pi}{D}\cdot\mu}\right)s(k) + n(k) \qquad \text{(Gl. 2)}$$

In Gleichung 2 bezeichnet H(..) die Kanalübertragungsfunktion für den μ-ten Träger. D stellt die Anzahl der Träger dar und n(k) ist die additive Rauschstörung. k ist der aktuelle Zeitpunkt während k-1 den vorherigen Zeitpunkt darstellt.

Die bedingte Wahrscheinlichkeitsdichtefunktion für den Empfang von r(k), wenn s(k) gesendet wurde, lautet folgendermaßen:

$$f\big(r(k)\,/\,s(k),\varphi(k)\big) \approx const \cdot e^{\frac{1}{\sigma_n^2}Re\{r^*(k-1)r(k)e^{j\varphi(k)}\}} \qquad \text{(Gl. 3)}$$

$\sigma_n^2$ ist dabei die Varianz von n(k) und wird folgendermaßen berechnet:

$$\sigma_n^2 = E\left\{|n(k)|^2\right\} \qquad \text{(Gl. 4)}$$

Zur Berechnung einer zuverlässigen Metrik, d. h. um zuverlässige Informationen im Empfänger bestimmen bzw. entscheiden zu können, werden die Log-Likelihood-Ratios λ(k) der einzelnen Binärsymbole b(1) und b(0) verwendet, welche für das i-te Bit folgendermaßen definiert sind.

$$\lambda^{(i)}(k) = \ln\left\{\frac{Wahrscheinlichkeit, da\beta Bit\big(b^{(i)} = 1\big)}{Wahrscheinlichkeit, da\beta Bit\big(b^{(i)} = 0\big)}\right\} \qquad \text{(Gl. 5)}$$

Ausgeschrieben ergibt sich damit Gleichung 6:

$$\lambda^{(i)}(k) = \ln\left\{\frac{\sum_{[\varphi]\in\{[\varphi]/i-tesBit=1\}} f\big(r(k)\,/\,s(k),\varphi\big)\cdot Pr\{\varphi\}}{\sum_{[\varphi]\in\{[\varphi]/i-tesBit=0\}} f\big(r(k)\,/\,s(k),\varphi\big)\cdot Pr\{\varphi\}}\right\} \qquad \text{(Gl. 6)}$$

Pr(φ) stellt die Wahrscheinlichkeit dar, daß die Phase des zu bestimmenden Informationssymbols einen bestimmten Wert einnimmt. Es existieren vier verschiedenen Phasenzustände (Fig. 1, Fig. 2), die alle gleich wahrscheinlich sind. Die Wahrscheinlichkeit Pr(φ) ist daher für alle Summanden von Gleichung 6 gleich und kann aus Gleichung 6 herausgekürzt werden. Somit ergibt sich für die Log-Likelihood-Ratios folgender Ausdruck:

$$\lambda^{(i)}(k) = \ln \left\{ \frac{\sum\limits_{[\varphi] \in \{[\varphi]\}_{i-tesBit=1}} f(r(k)/s(k), \varphi)}{\sum\limits_{[\varphi] \in \{[\varphi]\}_{i-tesBit=0}} f(r(k)/s(k), \varphi)} \right\} \qquad \text{(Gl. 7)}$$

Wenn Gleichung 3 in Gleichung 7 eingesetzt wird und die Summation ausgeschrieben wird, ergeben sich folgende Ausdrücke für die Log-Likelihood-Ratios für die Bits des Informationssymbols b(0) und b(1):

$$\lambda^{(0)} = \ln \left\{ \frac{\exp\left\{\frac{1}{\sigma_n^2} \text{Re}\{r^*[k-1] \cdot r[k] \cdot (-1)\}\right\} + \exp\left\{\frac{1}{\sigma_n^2} \text{Re}\{r^*[k-1] \cdot r[k] \cdot (j)\}\right\}}{\exp\left\{\frac{1}{\sigma_n^2} \text{Re}\{r^*[k-1] \cdot r[k] \cdot (1)\}\right\} + \exp\left\{\frac{1}{\sigma_n^2} \text{Re}\{r^*[k-1] \cdot r[k] \cdot (-j)\}\right\}} \right\} \quad \text{(Gl. 8)}$$

$$\lambda^{(1)} = \ln \left\{ \frac{\exp\left\{\frac{1}{\sigma_n^2} \text{Re}\{r^*[k-1] \cdot r[k] \cdot (-1)\}\right\} + \exp\left\{\frac{1}{\sigma_n^2} \text{Re}\{r^*[k-1] \cdot r[k] \cdot (-j)\}\right\}}{\exp\left\{\frac{1}{\sigma_n^2} \text{Re}\{r^*[k-1] \cdot r[k] \cdot (1)\}\right\} + \exp\left\{\frac{1}{\sigma_n^2} \text{Re}\{r^*[k-1] \cdot r[k] \cdot (j)\}\right\}} \right\}$$

(Gl.9)

Nach bekannten Umformungen lassen sich Gleichung 8 und Gleichung 9 folgendermaßen vereinfachen:

$$\lambda^{(0)} = -\frac{1}{\sigma_n^2} \left( \text{Re}\{r^*[k-1] \cdot r[k]\} + \text{Im}\{r^*[k-1] \cdot r[k]\} \right) \qquad \text{(Gl. 10)}$$

$$\lambda^{(1)} = -\frac{1}{\sigma_n^2} \left( \text{Re}\{r^*[k-1] \cdot r[k]\} - \text{Im}\{r^*[k-1] \cdot r[k]\} \right). \qquad \text{(Gl. 11)}$$

Gleichung 10 und Gleichung 11 sind durch das Blockschaltbild in Fig. 6 realisiert. In Fig. 6 wird zunächst mittels eines Differenz-Decodierers 64 eine vorhandene Differenz-Codierung rückgängig gemacht. Das Ausgangssignal des Differenz-Decodierers wird dann in zwei Blöcke 66 und 68 eingespeist, wobei der Block 66 die Funktion implementiert, einen Realteil aus einer komplexen Zahl zu extrahieren, während der Block 68 die Funktion besitzt, ein Imaginärteil aus einer komplexen Zahl zu extrahieren. Entsprechend den Gleichungen 10 und 11 sind in Fig. 6 zwei Summierer 70, 72 gezeigt, die von den Blöcken 66, 68 kreuzweise bedient werden. Ausgangsseitig sind noch zur Durchführung der Multiplikation der Varianz des additiven Rauschens n(k) zwei Multiplikatoren 74, 76 vorgesehen, an deren Ausgang die erwünschten Log-Likelihood-Ratios für das erste Bit b(0) und das zweite Bit b(1) der zu bestimmenden empfangenen Informationssymbole ausgegeben werden.

Fig. 6 stellt damit eine fest verdrahtete Realisierung der Gleichungen 10 und 11 dar, um im bekannten Fall einer Signalkonstellation, wie sie in Fig. 3 gezeigt ist, bei einmaliger Übertragung einer Information eine Soft-Metrik-Berechnung durchführen zu können.

Auf die in den Gleichungen 1 bis 11 dargestellte Herleitung der Soft-Metrik-Berechnung für den bekannten Fall wird später Bezug genommen, um eine Soft-Metrik-Berechnung für den erfindungsgemäßen Fall herzuleiten, bei dem zwei Sendesymbole vom Sender gesendet und vom Empfänger empfangen werden, die beide auf dem gleichen Informationssymbol basieren.

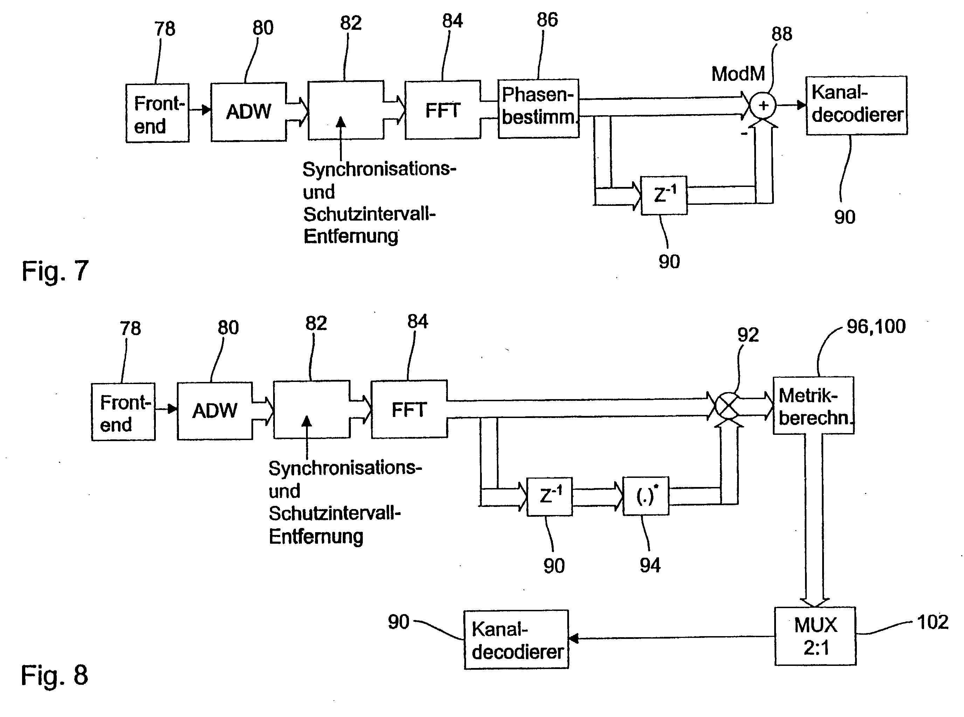

Zunächst sei jedoch auf Fig. 7 Bezug genommen, das einen erfindungsgemäßen Empfänger darstellt, der nach dem Kohärenzprinzip arbeitet. Ein mit "Front-End" bezeichneter Block 78 umfaßt eine Empfangsantenne und bestimmte bekannte Signalverarbeitungen, wie z. B. eine Umsetzung auf eine Zwischenfrequenz, eine Filterung und ähnliches. Dem Block 78 ist ein Block 80 nachgeschaltet, der mit ADW für "Analog-Digital-Wandler" bezeichnet ist. Dieser Block soll eine "Down-Sampling"- und eine Filter-Operation sowie eine Analog-Digital-Wandlung veranschaulichen. Das am Front-End 78 empfangene HF-Signal wird somit auf das Basisband umgesetzt und von dem ADW 80 abgetastet. üblicherweise ist das Ausgangssignal des ADW ein komplexes Signal mit Realteil und Imaginärteil, wobei sowohl der Realteil als auch der Imaginärteil mit 8 Bit oder einer anderen durch den ADW bestimmten Wortbreite quantisiert sein können. Bezüglich der Notation in den Zeichnungen sei darauf hingewiesen, daß ein breiter Pfeil darstellt, daß hier komplexe Signale mit Real- und Imaginärteil laufen, während ein dünner Pfeil, der durch eine einzige Linie gezeichnet ist, veranschaulichen soll, daß hier lediglich entweder ein Real- oder ein Imaginärteil oder überhaupt ein Wert zu einem Zeitpunkt läuft.

Der quantisierten Abtastwertfolge, die von dem ADW 80 ausgegeben wird, wird durch einen Block 82, der mit Synchronisations- und Schutzintervall-Entfernung bezeichnet ist, sowohl die Synchronisationssequenz als auch die Schutzintervalle zwischen den MCM-Symbolen entzogen. Am Ausgang des Blocks 82 liegt somit ein MCM-Frame, der nur noch aus den MCM-Symbolen besteht. Anschließend werden die MCM-Symbole eines nach dem anderen durch einen Block 84, der mit FFT bezeichnet ist und eine Fouriertransformation in den Frequenzbereich ausführt, in den Frequenzbereich transformiert. Am Ausgang des Blocks FFT liegt somit nach einer FFT-Operation das Spektrum eines MCM-Symbols an, wobei die einzelnen Spektralwerte oder Spektrallinien einen Realteil und einen Imaginärteil haben, wobei sowohl der Realteil als auch der Imaginärteil entsprechend der Bitbreite des ADW quantisiert sind. Bei einem bevorzugten Ausführungsbeispiel haben wie gesagt sowohl der Realteil als auch der Imaginärteil eine Wortbreite von 8 Bit.

Im kohärenten Fall, auf den sich Fig. 7 bezieht, wird nun in einem Block 86 die Phase jedes nach Real- und Imaginärteil vorliegenden Trägers, d. h. jeder Spektrallinie, auf für Fachleute bekannte Art und Weise geschätzt bzw. bestimmt. Am Ausgang des Blocks Phasenbestimmung 86 liegen daher zeitlich aufeinanderfolgende Phasenwerte an, die die Phasen der empfangenen Spektrallinien wiedergeben. Mittels eines ModM-Addierers 88 und eines Verzögerungsglieds 90, das um einen Taktzyklus verzögert, wird die im Sender eingeführte Differenz-Codierung rückgängig gemacht, d. h. es wird eine Differenz-Decodierung (64, Fig. 6) durchgeführt. Am Ausgang des Addierers 88 liegen somit Phasenwerte an, die das im Sender am Ausgang des Blocks 52 (Fig. 5) gebildete Informationssymbol darstellen sollen. Die Phasenwerte am Ausgang des Addierers 88 sind mit einer durch die Phasenbestimmungseinrichtung 86 gegebenen Quantisierung vorhanden. Selbstverständlich werden die Phasenwerte am Ausgang des Addierers 88 nicht genau 0°, 90°, 180° oder 270° betragen, sondern sie werden von den erwarteten Werten abweichen, da sowohl durch den Sender als auch durch den Empfänger und besonders durch den (Freiluft-) Übertragungskanal Phasenverzerrungen oder sonstige Störungen eingeführt worden sind.

Falls im Sender, der in Fig. 5 gezeigt ist, keine Kanalcodierung durchgeführt worden ist, d. h. der Kanalcodierer 50 nicht vorhanden war, können die Ausgangssignale des Addierers 88 in einen Entscheider eingegeben werden, der beispielsweise bestimmt, daß alle Phasenwerte unter 45° einer Phase von 0° entsprechen sollen, während alle Phasenwerte über einer Phase von 45° einer Phase von 90° für ein Informationssymbol entsprechen sollen. Eine solche einfache Entscheidung wird als "harte" Entscheidung bezeichnet. Eine solche harte Entscheidung kann jedoch zu vielen falschen Entscheidungen führen. Daher wurde im Kanalcodierer 50 bereits eine Faltungscodierung durchgeführt, die nun im Empfänger mittels eines Blocks Kanal-Decodierer 90 wieder rückgängig gemacht werden muß. Auf für Fachleute bekannte Art und Weise wird hierbei ein Viterbi-Algorithmus eingesetzt, wenn ein Faltungscode im Sender genommen wurde. Andere Algorithmen und Verfahren zum fehlersicheren Codieren im Sender und zum entsprechenden fehlersicheren Decodieren im Empfänger sind bekannt und müssen daher nicht weiter ausgeführt werden.

Aufgrund destruktiver Interferenzen oder ähnlicher Störungen des Übertragungskanals kann jedoch der Fall auftreten, daß auch trotz leistungsfähigster Kanalcodierung und Kanaldecodierung ein Informationsverlust auftritt. Um dem entgegenzuwirken, werden Informationen erfindungsgemäß zwei- oder mehrmals übertragen. Im einfachsten Fall liegen dann am Ausgang des Addierers 88 zu unterschiedlichen Zeitpunkten $k_1$ und $k_2$ bzw. $k_n$ zwei bzw. n quantisierte Phasenwerte an. Wenn ein quantisierter Phasenwert von den beiden quantisierten Phasenwerten, die sich auf ein einziges Informationssymbol beziehen, im Empfänger ein relativ eindeutiges Ergebnis hat, während der andere ein eher zweideutiges Ergebnis hat, kann der andere Phasenwert vernachlässigt werden und die Phasenentscheidung auf dem einen mit relativ eindeutigem Ergebnis durchgeführt werden. Selbstverständlich wird entweder eine "harte" Entscheidung oder eine Kanal-Decodierung eingesetzt. Beim Mobilfunk wird eine Faltungscodierung im Sender und eine entsprechende Kanal-Decodierung im Empfänger vorteilhaft sein. Harte Entscheidungen können besonders beim Mobilempfang zu einer Verschlechterung der Empfängerzuverlässigkeit führen.

Alternativ können die beiden Phasenwerte addiert und dann durch zwei geteilt werden, um mittels einer Mittelung eine zuverlässigere Entscheidung treffen zu können. Eine weitere Möglichkeit besteht darin, am Eingang der Phasenbestimmungseinrichtung 86 die Amplitude der beiden empfangenen Sendesymbole, die bei der Phasendifferenzbildung beteiligt sind, um das Differenzsymbol zu ermitteln, festzustellen und den quantisierten Phasenwert bei der Entscheidung zu berücksichtigen, bei dem die empfangenen Sendesymbole vor der Differenzbildung die größeren Amplituden hatten. Eine weitere Möglichkeit zur Kombination der beiden empfangenen Sendesymbole, die auf dem gleichen Informationssymbol basieren, besteht in einer nach den beteiligten Amplituden ausgeführten Gewichtung und entsprechenden Mittelung. Gemäß einem bevorzugten Ausführungsbeispiel der vorliegenden Erfindung werden jedoch beide quantisierten Phasendifferenzen, die das Informationssymbol darstellen, als "soft-quantisierte" Phasenwerte verwendet und bei einer Kanal-Decodierung 90 mittels eines Viterbi-Algorithmus oder eines ähnlichen Algorithmus verwendet, um durch eine "weiche" Entscheidung eine Entscheidung mit einer geringeren Anzahl von Fehlentscheidungen zu erreichen.

Fig. 8 zeigt ein Blockschaltbild für einen erfindungsgemäßen Empfänger bei inkohärentem Empfang. Der in Fig. 8 schematisch dargestellte Empfänger entspricht bis zu Block FFT dem Empfänger von Fig. 7. Das Inkohärenz-Prinzip äußert sich jedoch bei dem Empfänger von Fig. 8 darin, daß keine Phasenbestimmungseinrichtung 86 (Fig. 7) vorhanden ist, sondern stattdessen ein Multiplizierer 92, ein Verzögerungsglied 90 und eine Einrichtung 94 zum Bilden eines konjugiert komplexen Wertes. Die Elemente 90, 92, 94 dienen bei dem in Fig. 8 gezeigten Empfänger dazu, die Differenzcodierung, die in einem Sender (Fig. 5) eingeführt worden ist, wieder rückgängig zu machen, um aus den empfangenen Sendesymbolen wieder auf das ursprünglich gesendete Informationssymbol b(1) b(0) schließen zu können. Am Ausgang des Multiplizierers 92 steht dann das komplexe Produkt des aktuellen Sendesymbols und des konjugiert komplexen Sendesymbols vom letzten Takt.

Wenn die komplexe Notation nach Betrag und Phase verwendet wird, steht am Ausgang des Multiplizierers 92 ein Wert, der als Betrag die Multiplikation der Beträge des aktuellen Sendesymbols und des letzten Sendesymbols hat, und der als Phase die Differenz der Phasen des aktuellen und des letzten Sendesymbols aufweist. In dieser Phasendifferenz steckt die erwünschte Nutzinformation, da der Sender eine Differenz-Phasenumtastung mit den Sendesymbolen ausgeführt hatte. Im Gegensatz zum kohärenten Empfänger, der in Fig. 7 gezeigt ist, bei dem zum Bilden der Phasendifferenz lediglich eine ModM-Addition (88) erforderlich war, findet beim inkohärenten Empfänger gemäß Fig. 8 eine Multiplikation zweier komplexer Zahlen statt.

Da die Amplituden der Empfangssignale beim Mobilempfang üblicherweise relativ klein sind, wird die Amplitude des empfangenen Differenzsymbols am Ausgang des Multiplizierers 92 noch kleiner. Damit fällt jedoch wesentlich die Trefferrate bei der Entscheidung, ob es sich nun um einen der beispielsweise vier Phasenzustände handelt. Dazu sei kurz auf Fig. 3 verwiesen. Wenn das Sendesymbol b(1) b(0) = 00 betrachtet wird, das im Sendefall eine Amplitude von 1 bzw. eine gewichtete Amplitude (Fig. 1) hat, ist zu sehen, daß die Phasenentscheidung immer unsicherer wird, je kleiner die Amplitude des empfangenen Sendesymbols wird. Im Extremfall, wenn die Amplitude derart klein wird, daß sie nahezu im Ursprung der komplexen Ebene liegt, ist keine Phasenentscheidung mehr möglich, obwohl das empfangene Differenzsymbol am Ausgang des Multiplizierers 92 bei der Berechnung sicherlich einen Phasenterm enthält. Dieser Phasenterm ist jedoch aufgrund der dann sehr geringen Amplitude nicht mehr signifikant und wird, wenn keine weiteren Vorkehrungen getroffen werden, nahezu zwangsläufig zu einer falschen Entscheidung führen. Erfindungsgemäß wird daher in Analogie zu der Metrikberechnung, die in den Gleichungen 1 bis 11 dargestellt worden ist, auch beim Empfang von zwei Sendesymbolen, die sich beide auf ein einziges Informationssymbol beziehen, eine Metrikberechnungseinheit 96 dem Multiplizierer 92 nachgeschaltet.

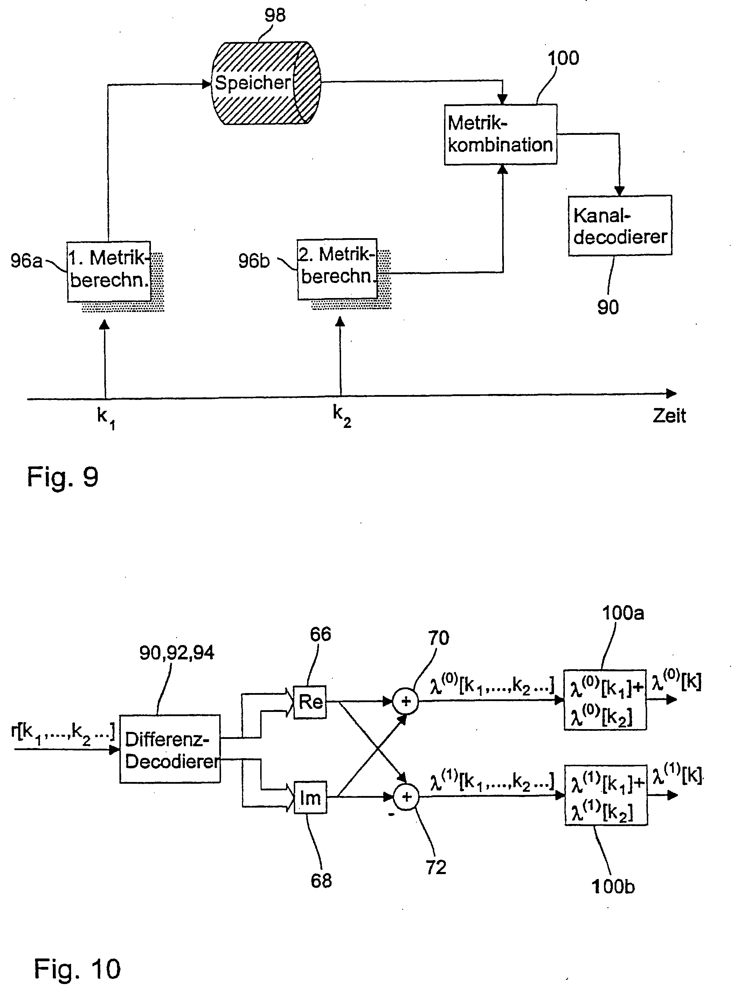

Im nachfolgenden wird auf die erfindungsgemäße Metrikberechnung 96 eingegangen. Bevor jedoch eine Ableitung der Log-Likelihood-Ratios für das erfindungsgemäße Konzept dargestellt wird, bei dem zwei Sendesymbole, die sich voneinander unterscheiden, die jedoch auf dasselbe Informationssymbol bezogen sind, übertragen werden, wird auf Fig. 9 Bezug genommen, um eine Übersichtsdarstellung in zeitlicher Hinsicht zu geben. Zu einem Zeitpunkt $k_1$, zu dem das erste Sendesymbol empfangen wird, bzw. zu dem aus dem ersten Sendesymbol das entsprechende Differenzsymbol berechnet wird, in dem die Nutzinformation steckt, wird eine erste Metrikberechnung 96a durchgeführt. Zum Zeitpunkt $k_2$, zu dem das zweite Sendesymbol empfangen wird, bzw. zu dem das entsprechende Differenzsymbol bei Differenzcodierung empfangen wird, wird auch für das zweite empfangene Sendesymbol eine Metrikberechnung 96b durchgeführt. Das Ergebnis der ersten Metrikberechnung 96a wird in einem Speicher 98 zwischengespeichert, um diesen Wert in der Zeitspanne zwischen $k_1$ und $k_2$ zu halten. Wenn die zweite Metrikberechnung 96b vollendet ist, wird das Ergebnis der ersten Metrikberechnung aus dem Speicher 98 ausgelesen und in einer Metrikkombinationseinrichtung mit dem Ergebnis der zweiten Metrikberechnung kombiniert. Wie es bereits erwähnt wurde, kann die Metrikkombination in einer einfachen Addition bestehen. Alternativ kann in der Metrikkombinationseinrichtung 100 auch eine Entscheidung durchgeführt werden, welche Metrik zuverlässiger ist, wobei dann die günstigere Metrik zur Weiterverarbeitung im Kanal-Decodierer 96 genommen wird, während die andere verworfen wird. Außerdem kann in der Metrikkombinationseinrichtung 100 auch eine gewichtete Addition durchgeführt werden, wobei Amplituden der empfangenen Sendesymbole, die einem entsprechenden Differenzsymbol zugrunde liegen, berücksichtigt werden, um darauf schließen zu können, welche Metrik eher zuverlässig ist. Wenn empfangene Sendesymbole eine eher große Amplitude haben, so kann davon ausgegangen werden, daß sie korrekte Informationen tragen, wogegen dies bei empfangenen Sendesymbolen mit eher kleinen Amplituden nicht sicher ist. Das Ergebnis der Metrikkombinationseinrichtung 100 wird dann in einen Kanal-Decodierer 90 eingespeist, der dem Kanal-Decodierer 90 von Fig. 7 entspricht und bei Verwendung eines Faltungscodes im Kanalcodierer 50 (Fig. 5) einen Viterbi-Algorithmus und ähnliches implementiert.

Aus Fig. 9 ist ersichtlich, daß das erfindungsgemäße Konzept, das beispielhaft in Verbindung mit zwei Sendesymbolen gezeigt ist, die sich voneinander unterscheiden, die sich aber auf das gleiche Informationssymbol beziehen, ohne weiteres auf den Fall ausgedehnt werden, bei dem mehr als zwei Sendesymbole erzeugt werden, was zu einer nicht nur doppelten sondern mehrmaligen Übertragung eines einzigen Informationssymbols führt. Wenn beispielsweise eine vierfache Informationsübertragung angenommen wird, wie sie beim bevorzugten Ausführungsbeispiel angewendet wird, da der zweite Mapper 54 eine vierfache Erweiterung des Konstellationsdiagramms schafft, werden weitere Metrikberechnungseinheiten 96 und weitere Speicher 98 verwendet, wobei die Metrikkombinationseinrichtung 100 in diesem Fall vier Eingänge haben wird, um die Ergebnisse der einzelnen Metrikberechnungen zu den Zeitpunkten ki kombinieren zu können. Je häufiger ein Informationssymbol erneut gesendet wird, umso höher wird die Anzahl der richtigen Entscheidungen im Kanal-Decodierer 90 sein. Je häufiger jedoch Informationen neu gesendet werden, umso stärker fällt selbstverständlich die Biteffizienz, die natürlich im Fall des einfachen Sendens am höchsten ist. Aufgrund der effektiven Komprimierungsalgorithmen, die beispielsweise in der MPEG-Standardfamilie implementiert sind, und aufgrund vorhandener schneller Schaltungen, die eine hohe Trägerfrequenz erlauben, die im unteren bis mittleren Gigahertzbereich liegt, ist jedoch die übertragene Menge an Bits nicht so sehr entscheidend als die sichere Detektion. Besonders wenn daran gedacht wird, daß das erfindungsgemäße System für einen digitalen Rundfunk eingesetzt wird, ist eine sichere Erfassung mit einer minimalen Anzahl an falschen Entscheidungen wesentlich, damit ein derartiges Produkt am Markt Akzeptanz findet, und zwar besonders bei Übertragungskanälen mit schwieriger Topologie, wie z. B. in einer Großstadt mit vielen Wolkenkratzern. Besonders in Großstädten, und im Zentrum von Großstädten, welche besondere Herausforderungen für den digitalen Rundfunk darstellen, werden die meisten Kunden sein, weshalb eben dort ein fehlersicherer Empfang ohne Störungen Priorität hat.

Im nachfolgenden wird auf die Metrikberechnung, die in der ersten Metrikberechnungseinheit 96a und in der zweiten Metrikberechnungseinheit 96b ausgeführt wird, eingegangen. Es sei darauf hingewiesen, daß in der Praxis die erste Metrikberechnungseinheit 96a und die zweite Metrikberechnungseinheit 96b die gleiche Metrikberechnungsvorrichtung sein wird, da, wie es aus Fig. 9 deutlich ist, hier Metrikberechnungen zu unterschiedlichen Zeitpunkten ausgeführt werden.

Im nachfolgenden wird die schaltungstechnische Realisierung zur Berechnung der Log-Likelihood-Ratios im erfindungsgemäßen Fall des Sendens von zwei Sendesymbolen, die sich voneinander unterscheiden, die jedoch auf demselben Informationssymbol basieren, gleichungsmäßig hergeleitet.

Dazu seien zwei Paare $r(k_1-1)$, $r(k_1)$ bzw. $r(k_2-1)$, $r(k_2)$ von Empfangssymbolen betrachtet, wobei die Zeitpunkte $k_1$ und $k_2$ voneinander unterschiedlich sind. Zur Vereinfachung der Herleitung sei der Übergang zwischen den zugehörigen Sendesymbolen $s(k_1-1)$ zu $s(k_1)$ durch ein gemeinsames (Quell-) Bit (Index 1) repräsentiert. Das bedeutet, daß angenommen wird, daß das Bit i im Übergang von $s(k_1-1)$ auf $s(k_1)$ bzw. das Bit j im Übergang von $s(k_2-1)$ auf $s(k_2)$ identisch sind. An dieser Stelle sei darauf hingewiesen, daß Sendesymbole durch $s(k)$ dargestellt sind, während Empfangssymbole durch $r(k)$ dargestellt sind. (s = send; r = receive). Betrachtet man die beiden Empfangspaare unabhängig voneinander, so läßt sich wie im Fall von Fig. 6 die Wahrscheinlichkeit bzw. das Log-Likelihood-Ratio für das gesuchte Binärsymbol angeben. Dazu wird $\varphi_1$ dem Empfangspaar $r(k_1-1)$, $r(k_1)$ und $\varphi_2$ dem Empfangspaar $r(k_2-1)$, $r(k_2)$ zugeordnet. Sowohl für $\varphi_1$ als auch für $\varphi_2$ sind die Log-Likelihood-Ratios $\lambda^{(1)}$ für das Bit i bzw. das Bit j folgendermaßen gegeben, wobei 1 0 oder 1 betragen kann, wenn das Informationssymbol b(1) b(0) aus 2 Bit besteht.

$$\lambda^{(l)}(k) = \ln\left\{\frac{Wahrscheinlichkeit, da\beta Bit\left(b^{(l)} = 1\right)}{Wahrscheinlichkeit, da\beta Bit\left(b^{(l)} = 0\right)}\right\} \qquad (\text{Gl. 12})$$

$$\lambda^{(l)}(k) = \ln\left\{\frac{\sum_{[\varphi]\in\{[\varphi_1,\varphi_2]/l-tesBit=1\}} f\left(r(k_1),r(k_2)/s(k_1),s(k_2),\varphi_1,\varphi_2\right)\cdot\Pr\{\varphi_1,\varphi_2\}}{\sum_{[\varphi]\in\{[\varphi_1,\varphi_2]/l-tesBit=0\}} f\left(r(k_1),r(k_2)/s(k_1),s(k_2),\varphi_1,\varphi_2\right)\cdot\Pr\{\varphi_1,\varphi_2\}}\right\} \qquad (\text{Gl. 13})$$

Sind die betrachteten Empfangspaare zeitlich relativ weit voneinander entfernt, so kann von unabhängigen Übertragungsbedingungen ausgegangen werden, was es ermöglicht, daß beide Ereignisse als statistisch unabhängig voneinander betrachtet werden. Dies lautet gleichungsmäßig folgendermaßen:

$$\Pr\{\varphi_1, \varphi_2\} = \Pr\{\varphi_1\} \cdot \Pr\{\varphi_2\} \qquad (Gl.\ 14)$$

Damit ergibt sich:

$$\sum_{[\varphi]\in\{[\varphi_1,\varphi_2]/i-tesBit=l\}} f\left(r(k_k), r(k_2)/s(k_1), s(k_2), \varphi_1, \varphi_2\right) = $$
$$\sum_{[\varphi]\in\{[\varphi_1]/i-tesBit=l\}} f\left(r(k_k)/s(k_1), \varphi_1\right) \cdot \sum_{[\varphi]\in\{[\varphi_2]/j-tesBit=l\}} f\left(r(k_2)/s(k_2), \varphi_2\right) \qquad (Gl.\ 15)$$

Für das 1-te Bit ergeben sich somit folgende Gleichungen:

$$\lambda^{(l)} = \ln\left\{ \frac{\displaystyle\sum_{[\varphi]\in\{[\varphi_1]/i-tesBit=1\}} f\left(r(k_1)/s(k_1), \varphi_1\right)\cdot\Pr\{\varphi_1\}\cdot \sum_{[\varphi]\in\{[\varphi_2]/j-tesBit=1\}} f\left(r(k_2)/s(k_2), \varphi_2\right)\cdot\Pr\{\varphi_2\}}{\displaystyle\sum_{[\varphi]\in\{[\varphi_1]/i-tesBit=0\}} f\left(r(k_1)/s(k_1), \varphi_1\right)\cdot\Pr\{\varphi_1\}\cdot \sum_{[\varphi]\in\{[\varphi_2]/j-tesBit=0\}} f\left(r(k_2)/s(k_2), \varphi_2\right)\cdot\Pr\{\varphi_2\}} \right\}$$

$$(Gl.\ 16)$$

$$\lambda^{(l)} = \ln\left\{ \frac{\displaystyle\sum_{[\varphi]\in\{[\varphi_1]/i-tesBit=1\}} f\left(r(k_1)/s(k_1), \varphi_1\right)\cdot\Pr\{\varphi_1\}}{\displaystyle\sum_{[\varphi]\in\{[\varphi_1]/i-tesBit=0\}} f\left(r(k_1)/s(k_1), \varphi_1\right)\cdot\Pr\{\varphi_1\}} \right\} + $$

$$(Gl.\ 17)$$

$$\ln\left\{ \frac{\displaystyle\sum_{[\varphi]\in\{[\varphi_2]/j-tesBit=1\}} f\left(r(k_2)/s(k_2), \varphi_2\right)\cdot\Pr\{\varphi_2\}}{\displaystyle\sum_{[\varphi]\in\{[\varphi_2]/j-tesBit=0\}} f\left(r(k_2)/s(k_2), \varphi_2\right)\cdot\Pr\{\varphi_2\}} \right\}$$

Aus Gleichung 16 und Gleichung 17 ist zu sehen, daß bei statistischer Unabhängigkeit eine einfache Addition der Log-Likelihood-Ratios für das entsprechende Bit des Informationssymbols durchgeführt werden kann:

$$\lambda^{(l)} = \lambda^{(i)} + \lambda^{(j)} \qquad (Gl.\ 18)$$

Bildlich ausgedrückt zeigt dieses Ergebnis Fig. 10. Eine Folge von Empfangssymbolen $r[k_1, \dots k_2, \dots]$ wird in einen Differenz-Decodierer eingespeist, der die Elemente 90, 92, 94 von Fig. 8 umfaßt. Das Ergebnis des Multiplizieres 92 wird dann wieder in eine Realteileinrichtung 66 und in eine Imaginärteileinrichtung 68 eingespeist, die wiederum zwei Summierer 70, 72 kreuzweise bedienen. Wenn das Informationssymbol, das bestimmt werden soll, vom Sender zweimal gesendet worden ist, sind zwei Metrikkombinationseinrichtungen 100a, 100b nötig, um die Addition von Gleichung 16 zu realisieren. Am Ausgang stehen dann die Log-Likelihood-Ratios für das Informationssymbol, die mittels zweier Übertragungen desselben Informationssymbols ermittelt worden sind. Diese beiden Werte werden, wie es aus Fig. 8 ersichtlich ist, in einen Multiplexer 102 eingespeist, derart, daß ein Log-Likelihood-Ratio nach dem anderen in den Kanal-Decodierer 90 eingespeist wird, um dort die weiche Entscheidung beispielsweise mittels des Viterbi-Algorithmus durchführen zu können. Dies ist durch die einfache Verbindungslinie zwischen dem Multiplexer 102 und dem Kanal-Decodierer 90 wiedergegeben.

Im nachfolgenden wird beispielhaft auf die Signalkonstellation, die in Fig. 1 gezeigt ist, eingegangen, um die Ermittlung der Log-Likelihood-Ratios im Falle dieser "4-DAPSK" darzustellen. Die Phase kann einen der vier Zustände $\{0, \varphi/2, \varphi, 3\varphi/2\}$ einnehmen. Für die Amplitudengewichtungen existieren 4 $c(i)$, $i$ aus $\{0, 1, 2, 3\}$, wobei für eine praktische Anwendung folgende $c_i$ genommen werden können: $\{c(0), c(1), c(2), c(3)\} = \{0,18, 0,35, 0,53, 0,71\}$. Unter Verwendung der Definition, die in Gleichung 11 gegeben wurde, ergibt sich Gleichung 19, die in Analogie zu Gleichung 13 steht.

$$\lambda^{(l)}(k) = \ln \frac{\sum_{l-tesBit=1} f\left(r(k_1), r(k_2) / s(k_1), s(k_2), c^{(j)}, \varphi\right) \cdot \Pr\left\{c^{(j)}, \varphi\right\}}{\sum_{l-tesBit=0} f\left(r(k_1), r(k_2) / s(k_1), s(k_2), c^{(j)}, \varphi\right) \cdot \Pr\left\{c^{(j)}, \varphi\right\}} \qquad \text{(Gl. 19)}$$

Aufgrund der Tatsache, daß die Phase und die Amplitude voneinander unabhängige Variablen sind, kann Gleichung 14 analog geschrieben werden:

$$\Pr\left\{c^{(j)}, \varphi\right\} = \Pr\left\{c^{(j)}\right\} \cdot \Pr\left\{\varphi\right\} \qquad \text{(Gl. 20)}$$

Das Ergebnis für die Log-Likelihood-Ratios lautet ausgeschrieben folgendermaßen:

$$\lambda^{(l)}(k) = \ln \frac{\sum_{l-tesBit=1} f\left(r(k_1), r(k_2) / s(k_1), s(k_2), c^{(j)}, \varphi\right) \cdot \Pr\left\{c^{(j)}\right\} \cdot \Pr\left\{\varphi\right\}}{\sum_{l-tesBit=0} f\left(r(k_1), r(k_2) / s(k_1), s(k_2), c^{(j)}, \varphi\right) \cdot \Pr\left\{c^{(j)}\right\} \cdot \Pr\left\{\varphi\right\}} \qquad \text{(Gl. 21)}$$

Aus Gleichung 21 ist zu sehen, daß die Wahrscheinlichkeit $\Pr\{c^{(j)}\}$ für den Empfang einer bestimmten gewichteten Amplitude eine multiplikative Gewichtung für die Log-Likelihood-Ratios darstellt. Die Wahrscheinlichkeitsdichtefunktion im Fall der dargestellten DQPSK wird daher berechnet aus der Wahrscheinlichkeitsdichtefunktion für die DQPSK mit einer bestimmten Amplitude $c^{(j)}$, die dann mit $\Pr\{c^{(j)}\}$ im Nenner und im Zähler von Gleichung 21 multipliziert wird. Dies bedeutet, daß die einzelnen Amplituden durch eine Gewichtung entsprechend ihrer Wahrscheinlichkeiten in den Log-Likelihood-Ratios erscheinen. Analoge Gleichungen sind für das Signalkonstellationsdiagramm von Fig. 2 auf der Basis der obigen Herleitung herleitbar.

Zusammenfassend läßt sich festhalten, daß die vorliegende Erfindung im Zusammenhang mit einem Modulations/Demodulationsverfahren für die Träger einer Multiträgermodulation-Übertragung und im besonderen Fall einer OFDM nützlich ist. Zum einen wird eine Vergrößerung der Signalkonstellation erreicht, und zum anderen wird durch mehrfache Abbildung der Informationen auf die Träger ein "Mapping-Diversity"-Gewinn erzielt. Für das "Mapping Diversity" wird somit jedes Informationsbit mindestens zweimal gesendet. Vorzugsweise ist der Zeitabstand zwischen dem Senden der gleichen Information groß. In diesem Fall können die beiden Ereignisse als statistisch unabhängig voneinander gelten. Wenn jedoch der Übertragungskanal selbst betrachtet wird, so wird auch ein kleinerer Zeitabstand, bei dem die beiden Sendevorgänge nicht vollständig voneinander statistisch unabhängig angesehen werden können, ebenfalls zu einer Erhöhung der Detektionszuverlässigkeit führen, wenn der Kanal nur kurzen zeitlichen Schwankungen unterworfen ist.

Das "Demapping" oder Demodulieren im Fall des "Mapping Diversity" kann sowohl im kohärenten (Fig. 7) als im inkohärenten (Fig. 8) Fall verwendet werden. Die Metrikberechnung im Fall von "Mapping Diversity" wird in zwei Schritten durchgeführt. Der erste Metrik wird zum Zeitpunkt $k_1$ berechnet und gespeichert. Zum Zeitpunkt $k_2$ wird dann die zweite Metrik berechnet und anschließend mit der ersten Metrik kombiniert, wobei diese Kombination vorzugsweise als Addition ausgeführt wird. Das Ergebnis der Metrikkombination wird dann zum Kanal-Decodierer im Empfänger weitergegeben.

Im nachfolgenden wird zum Verständnis kurz auf die Log-Likelihood-Ratios eingegangen, bzw. wie dieselben im Kanal-Decodierer 90 ausgewertet werden. Aus Gleichung 11 beispielsweise ist zu sehen, daß der Wertebereich entsprechend der Logarithmus-Funktion zwischen -Unendlich bis +Unendlich reicht. Wenn ein Log-Likelihood-Ratio einen sehr negativen Wert hat, bedeutet dies, daß die Wahrscheinlichkeit, daß ein Bit eine 1 hat, sehr gering ist, und daß die Wahrscheinlichkeit, daß ein Bit eine 0 hat, sehr groß ist. In diesem Fall kann somit eine sehr sichere Entscheidung getroffen werden, daß das betrachtete Bit eben 0 ist. Wenn das Log-Likelihood-Ratio einen sehr großen Wert einnimmt, d. h. wenn das Argument des Logarithmus sehr groß wird, ist zu sehen, daß die Wahrscheinlichkeit, daß ein Bit 1 ist, eher groß ist, während die Wahrscheinlichkeit, daß ein Bit 0 ist, sehr gering ist. Dann kann eine sehr sichere Entscheidung getroffen werden, daß das Bit eine 1 hat. Für die weitere Decodierung im Kanal-Decodierer 90 werden daher die Bits b(0), b(1) durch die entsprechenden Log-Likelihood-Ratios ersetzt. Eine Auswertung der Log-Likelihood-Ratios könnte beispielsweise derart durchgeführt werden, daß festgelegt wird, daß alles, was unter 0,5 liegt, eine 0 ist, und daß alles, was über 0,5 liegt, eine 1 ist. Bereits wenn die Log-Likelihood-Ratios größer als 1 sind, kann davon gesprochen werden, daß eine sichere 1 vorliegt, während ein Wert unter 1 eine wenig sichere 1 darstellt.

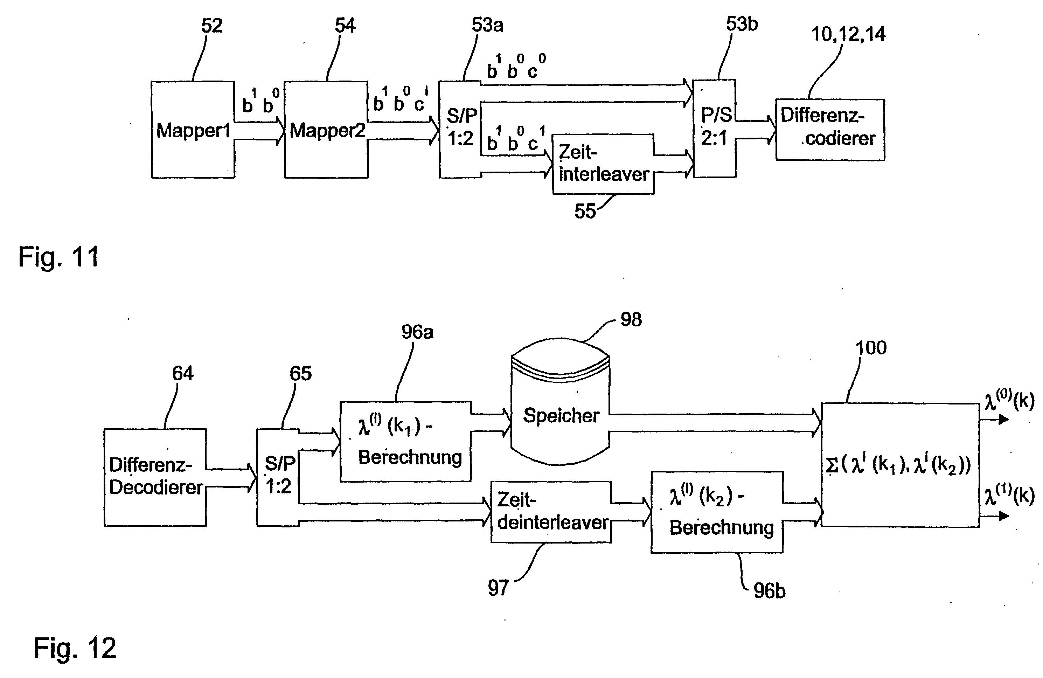

Zur detaillierteren Erläuterung des in Fig. 5 dargestellten Senders gemäß einem Ausführungsbeispiel der vorliegenden Erfindung sei nun Fig. 11 betrachtet. Fig. 11 zeigt wie Fig. 5 den ersten Mapper 52, den demselben nachgeschalteten zweiten Mapper 54 und einen Serien-Parallel-Wandler 53a. Wenn der Fall des Sendens von zwei Sendesymbolen, die sich auf dasselbe Informationssymbol beziehen, betrachtet wird, erzeugen die beiden Mapper zunächst das erste Sendesymbol $b^1b^0c^0$ und dann das zweite Sendesymbol $b^1b^0c^1$. Diese beiden Sendesymbole werden seriell erzeugt und dann durch 53a parallelisiert. Das erste Sendesymbol läuft dann direkt in einen Parallel-Seriell-Wandler 53b, während das zweite Sendesymbol in einen Zeit-Interleaver eingespeist wird, um das Senden des zweiten Sendesymbols zu einem späteren Zeitpunkt zu erreichen. Der Zeit-Interleaver fügt das in denselben eingespeiste Sendesymbol nach einer vorzugsweise fest eingestellten Zeitdauer in den Sendebitstrom vor dem Differenz-Codierer 10, 12, 14 ein. Der Zeit-Interleaver kann ausgestaltet sein, um das zweite Sendesymbol zu einem späteren Zeitpunkt für denselben Träger wie beim ersten Sendesymbol vorzusehen, oder vorzugsweise einen anderen Träger zu nehmen, wie es bereits ausgeführt wurde.

Aus Fig. 11 wird ferner deutlich, daß bei einem bevorzugten Ausführungsbeispiel des erfindungsgemäßen Senders die Gewichtungsreihenfolge fest eingestellt ist. Dies bedeutet, daß das erste Sendesymbol immer die Gewichtung c(0) hat, daß das zweite Sendesymbol immer die Gewichtung c(1) hat, daß das dritte Sendesymbol immer die Gewichtung c(2) hat, usw. Dies hat den Vorteil, daß der Empfänger bereits von vorneherein Kenntnis davon hat, welche Gewichtung ein empfangenes Symbol haben sollte, da die Gewichtungsreihenfolge vorzugsweise fest vorgegeben ist.

Fig. 12 zeigt eine etwas detailliertere Darstellung des erfindungsgemäßen Empfängers aus Fig. 7 bzw. Fig. 8. Fig. 12 ist auch Fig. 9 ähnlich. Dem Differenz-Decodierer ist ein Serien-Parallel-Wandler 65 nachgeschaltet. Dieser speist zum einen die erste Metrikberechnungseinrichtung 96a und zum anderen einen Zeit-Deinterleaver 97, der die durch den Zeit-Interleaver 55 eingeführte zeitliche und optional känalmäßige Verschachtelung wieder rückgängig macht. Dem Zeit-Deinterleaver 97 nachgeschaltet ist die zweite Metrikberechnungseinrichtung 96b. Die Metrikkombination wird bevorzugterweise durch Addition der zwei Einzel-Verhältnisse in der Metrikkombinationseinrichtung 100 ausgeführt, wie es bereits detailliert ausgeführt wurde.

Der Viterbi-Decodierer, der vorzugsweise in dem Kanaldecodierer enthalten ist, nimmt die beiden Ausgangssignale der Einrichtung 100 als Eingabe und berechnet die Metrik von einem Anfangszustand zu einem Endzustand in einem Trellisdiagramm. Der Weg mit maximaler Metrik ergibt dann neben der geschätzten Codefolge auch zugleich die geschätzte Informationsfolge. Im kohärenten Fall, in dem keine Log-Likelihood-Verhältnisse verwendet werden, werden die Empfangssignale zum Zeitpunkt $k_1$ und $k_2$ vor dem Eingang des Viterbi-Decodierers vorzugsweise addiert. Dies wird auch als Maximum Ratio Combining (MRC) bezeichnet.

Bezüglich der Kanaleigenschaften sei noch folgendes angemerkt. Selbstverständlich ist beim Senden der Kanal an sich unbekannt. Es ist jedoch notwendig, daß derselbe im Empfänger geschätzt wird. Diese Schätzung wird bei jeder praktischen Implementation anders ausfallen, da die Kanalschätzung vom System, vom Aufbau und von der verwendeten Kanalart abhängt. Bezüglich des Kanalrauschens wird primär das additive weiße Gauß'sche Rauschen (AWGN) betrachtet. Dabei ist zum einen die Verteilung des Rauschens und zum anderen das Verhältnis vom Signalpegel zum Rauschpegel bekannt. Diese Informationen werden im Kanal-Decodierer für die weitere Decodierung benutzt. Wenn ein Faltungscode im Sender benutzt wird, wird ein Viterbi-Decodierer, wie es bereits öfters erwähnt wurde, im Empfänger verwendet. Für eine praktische Implementierung ist $1/\sigma_n^2$ für alle Metrikinkremente identisch und damit für die Decodierung im Viterbi-Decodierer irrelevant. Wie es bereits auf Fig. 10 ersichtlich ist, kann daher $1/\sigma_n^2$ ohne Verlust vernachlässigt werden.

**Patentansprüche**

1. Verfahren zum Senden von Informationssymbolen mit einer Mehrzahl von Trägern mit folgenden Schritten:

Erzeugen (52, 54) eines ersten Sendesymbols aus einem Informationssymbol;

Erzeugen (52, 54) eines zweiten Sendesymbols aus dem gleichen Informationssymbol, wobei sich das zweite Sendesymbol von dem ersten Sendesymbol unterscheidet, wobei aus jedem Informationssymbol mindestens zwei voneinander unterschiedliche Sendesymbole erzeugbar sind, die diesem Informationssymbol eindeutig zugeordnet sind, und wobei sich alle Sendesymbole, die aus den einzelnen Informationssymbolen erzeugbar sind, voneinander und von den Informationssymbolen unterscheiden;

Modulieren (56) des ersten Sendesymbols auf einen Träger und Senden (62) des mit dem ersten Sendesymbol modulierten Trägers zu einem ersten Zeitpunkt ($k_1$); und

Modulieren des zweiten Sendesymbols auf einen Träger und Senden (62) des mit dem zweiten Sendesymbol modulierten Trägers zu einem zweiten Zeitpunkt ($k_2$), wobei der zweite Zeitpunkt zeitlich nach dem ersten Zeitpunkt liegt.

2. Verfahren zum Senden von Informationssymbolen mit einer Mehrzahl von Trägern, mit folgenden Merkmalen:

Erzeugen (52, 54) eines ersten Sendesymbols aus einem Informationssymbol;

Erzeugen (52, 54) eines zweiten Sendesymbols aus dem gleichen Informationssymbol, wobei sich das zweite Sendesymbol von dem ersten Sendesymbol unterscheidet, wobei aus jedem Informationssymbol mindestens zwei voneinander unterschiedliche Sendesymbole erzeugbar sind, die diesem Informationssymbol eindeutig zugeordnet sind, und wobei sich alle Sendesymbole, die aus den einzelnen Informationssymbolen erzeugbar sind, voneinander und von den Informationssymbolen unterscheiden;

Erzeugen (10, 12, 14) einer Differenz zwischen dem ersten Sendesymbol und einem demselben zeitlich vorausgehenden Sendesymbol, um ein erstes Differenzsymbol zu erhalten;

Erzeugen (10, 12, 14) einer Differenz zwischen dem zweiten Sendesymbol und einem demselben zeitlich vorausgehenden Sendesymbol, um ein zweites Differenzsymbol zu erhalten;

Modulieren (56) des ersten Differenzsymbols auf einen Träger und Senden (62) des mit dem ersten Differenzsymbol modulierten Trägers zu einem ersten Zeitpunkt ($k_1$); und

Modulieren des zweiten Differenzsymbols auf einen Träger und Senden (62) des mit dem zweiten Differenzsymbol modulierten Trägers zu einem zweiten Zeitpunkt ($k_2$), wobei der zweite Zeitpunkt zeitlich nach dem ersten Zeitpunkt liegt.

3. Verfahren nach Anspruch 1 oder 2, bei dem sich der mit dem ersten Sendesymbol bzw. Differenzsymbol modulierte Träger von dem mit dem zweiten Sendesymbol bzw. Differenzsymbol modulierten Träger unterscheidet.

4. Verfahren nach einem der vorhergehenden Ansprüche, bei dem die Zeitspanne zwischen dem ersten Zeitpunkt ($k_1$) und dem zweiten Zeitpunkt ($k_2$) derart lang ist, daß Übertragungen der mit den beiden Sendesymbolen bzw. Differenzsymbolen modulierten Träger über einen Übertragungskanal statistisch voneinander unabhängig sind.

5. Verfahren nach einem der vorhergehenden Ansprüche, bei dem das erste Sendesymbol einen einer vordefinierten Anzahl von Phasenzuständen in der komplexen Ebene einnehmen kann, und bei dem das zweite Sendesymbol den gleichen Phasenzustand in der komplexen Ebene wie das erste Sendesymbol einnimmt, aber einen unterschiedlichen Amplitudenzustand aufweist.

6. Verfahren nach einem der Ansprüche 1 bis 4, bei dem das erste Sendesymbol einen einer vordefinierten Anzahl von Phasenzuständen in der komplexen Ebene einnehmen kann, und bei dem das zweite Sendesymbol einen anderen Phasenzustand der komplexen Ebene wie das erste Sendesymbol einnimmt.

7. Verfahren nach Anspruch 2, bei dem neben dem ersten und dem zweiten Sendesymbol zwei weitere Sendesymbole zu unterschiedlichen Zeitpunkten übertragen werden, die den gleichen Phasenzustand aus einer Anzahl von vier Phasenzuständen in der komplexen Ebene aber zueinander unterschiedliche Amplituden aus jeweils vier vorgegebenen Amplituden haben.

8. Verfahren nach Anspruch 7, bei dem vor dem Schritt des Modulierens (56) eine Phasenzuweisung (16) zu einem binären Symbol ausgeführt wird, und bei dem der Schritt des Modulierens (56) den Schritt des inversen Frequenztransformierens der Mehrzahl von phasenumgetasteten Träger in den komplexen Zeitbereich umfaßt.

9. Verfahren nach einem der vorhergehenden Ansprüche, bei dem N verschiedene Träger, N Informationssymbole, N erste Sendesymbole und N zweite Sendesymbole vorhanden sind, bei dem ein Mehrträgermodulations-Symbol, MCM-Symbol, das Resultat einer inversen Fouriertransformation der mit den Sendesymbolen bzw. Differenzsymbolen beaufschlagten N Träger umfaßt, und
bei dem ein MCM-Frame eine Mehrzahl von MCM-Symbolen aufweist.

10. Verfahren nach Anspruch 9, bei dem die N zweiten Sendesymbole, die den N Informationssymbolen entsprechen, zeitlich über mehrere MCM-Frames verteilt sind.

11. Verfahren zum Empfangen von Informationssymbolen, die mittels einer Mehrzahl von Trägern übertragen werden, wobei ein Informationssymbol durch ein erstes und ein zweites unterschiedliches Sendesymbol dargestellt ist, die zu unterschiedlichen Zeitpunkten empfangen werden, wobei jedes Informationssymbol durch mindestens zwei voneinander unterschiedliche Sendesymbole darstellbar ist, die diesem Informationssymbol eindeutig zugeordnet sind, und wobei sich alle Sendesymbole, die die einzelnen Informationssymbolen darstellen können, voneinander und von den Informationssymbolen unterscheiden, mit folgenden Schritten:

Demodulieren (84) eines ersten Trägers, um ein erstes empfangenes Sendesymbol zu erhalten, zu einem ersten Zeitpunkt ($k_1$) ;

Speichern (98) des ersten empfangenen Sendesymbols bzw. von Informationen, die auf das erste empfangene Sendesymbol hinweisen;

Demodulieren (84) eines weiteren Trägers zu einem zweiten Zeitpunkt ($k_2$), um ein zweites empfangenes Sendesymbol zu erhalten; und

Verwenden des gespeicherten ersten empfangenen Sendesymbols bzw. der Informationen, die auf das erste empfangene Sendesymbol hinweisen, und des zweiten empfangenen Sendesymbols, um das Informationssymbol, das beiden empfangenen Sendesymbolen zugrunde liegt, zu ermitteln, indem festgestellt wird, welchem Informationssymbol der Informationssymbole das erste empfangene Sendesymbol und das vom ersten empfangenen Sendesymbol unterschiedliche zweite empfangene Sendesymbol zugeordnet sind.

12. Verfahren nach Anspruch 11, bei dem der eine Träger und der weitere Träger voneinander unterschiedlich sind.

13. Verfahren nach Anspruch 11 oder 12, bei dem die Sendesymbole Differenz-codiert sind, wobei ein Informationssymbol durch eine Differenz zweier zeitlich benachbarter Sendesymbole dargestellt ist, das ferner folgende Schritte aufweist:

Schätzen (86) der Phasen des ersten empfangenen Sendesymbols und eines dem ersten empfangenen Sendesymbol zeitlich vorausgehenden empfangenen Sendesymbols;

Bilden der Differenz der geschätzten Phasen, um eine erste empfangene Phasendifferenz zu erhalten, die auf das Informationssymbol hinweist;

Durchführen der Schritte des Schätzens und des Bildens der Differenz für das zweite empfangene Sendesymbol, um eine zweite empfangene Phasendifferenz zu erhalten, die auf das gleiche Informationssymbol hinweist;

Durchführen einer weichen Entscheidung aufgrund sowohl der ersten als auch der zweiten empfangenen Phasendifferenz, um einen ersten und einen zweiten Wert für das Informationssymbol zu erhalten; und

Bestimmen des Informationssymbols aus dem ersten und/oder zweiten Wert.

**14.** Verfahren nach Anspruch 13, bei dem statt des Schritts des Durchführens einer weichen Entscheidung folgender Schritt durchgeführt wird:

Durchführen einer harten Entscheidung aufgrund sowohl der ersten als auch der zweiten empfangenen Phasendifferenz, um einen ersten und zweiten Wert für das Informationssymbol zu erhalten.

**15.** Verfahren nach Anspruch 13 oder 14, bei dem im Schritt des Bestimmens der Wert stärker berücksichtigt wird, bei dem die Amplituden seiner zugrunde liegenden empfangenen Sendesymbole, aus denen die Phasendifferenz bestimmt wurde, näher an einer vorbestimmten Schwelle lagen.

**16.** Verfahren nach Anspruch 11 oder 12, bei dem die Sendesymbole Differenz-codiert sind, wobei ein Informationssymbol durch eine Differenz zweier zeitlich benachbarter Sendesymbole dargestellt ist, das ferner folgende Schritte aufweist:

Multiplizieren eines ersten Empfangssymbols mit dem konjugiert komplexen Wert eines zeitlich vorausgehenden Empfangssymbols;

Multiplizieren eines zweiten Empfangssymbols mit dem konjugiert komplexen Wert seines zeitlich vorausgehenden Empfangssymbols;

Berechnen der Log-Likelihood-Ratios für jedes der Multiplikationsergebnisse; und

Bestimmen des Informationssymbols aus den ersten und zweiten Log-Likelihood-Ratios.

**17.** Verfahren nach Anspruch 16, bei dem im Schritt des Bestimmens die Log-Likelihood-Ratios stärker berücksichtigt werden, deren zugrunde liegendes Multiplikationsergebnis einen höheren Betrag hatte.

**18.** Verfahren nach Anspruch 16, bei dem im Schritt des Bestimmens die Log-Likelihood-Ratios beider Multiplikationsergebnisse addiert werden, um für jedes Bit des Informationssymbols ein Log-Likelihood-Ratio zu erhalten.

**19.** Verfahren nach einem der Ansprüche 16 bis 18, bei dem die Log-Likelihood-Ratios für die Bits des Informationssymbols einem Viterbi-Decodieralgorithmus zugeführt werden, um die Bits des Informationssymbols im Empfänger zu bestimmen.

**20.** Vorrichtung zum Senden von Informationssymbolen mittels einer Mehrzahl von Trägern, mit folgenden Merkmalen:

einer Einrichtung (52, 54) zum Erzeugen eines ersten und eines zweiten Sendesymbols aufgrund eines einzigen Informationssymbols, wobei sich das erste und das zweite Sendesymbol voneinander unterscheiden, wobei aus jedem Informationssymbol mindestens zwei voneinander unterschiedliche Sendesymbole erzeugbar sind, die diesem Informationssymbol eindeutig zugeordnet sind, und wobei sich alle Sendesymbole, die aus den einzelnen Informationssymbolen erzeugbar sind, voneinander und von den Informationssymbolen unterscheiden;

einer Einrichtung (56) zum Modulieren des ersten und des zweiten Sendesymbols auf einen ersten und einen zweiten Träger; und

einer Einrichtung (62) zum Senden des modulierten ersten Sendesymbols zu einem ersten Zeitpunkt ($k_1$) und des modulierten zweiten Sendesymbols zu einem zweiten Zeitpunkt ($k_2$), wobei der zweite Zeitpunkt zeitlich nach dem ersten Zeitpunkt liegt.

**21.** Vorrichtung nach Anspruch 20, bei dem der erste Träger und der zweite Träger voneinander unterschiedlich sind.

**22.** Vorrichtung nach Anspruch 20 oder 21, bei dem die Einrichtung (52, 54) zum Erzeugen ferner folgende Merkmale aufweist:

eine Gruppierungseinrichtung (52) zum Gruppieren einer Mehrzahl von Bits, um ein Informationssymbol zu bilden; und

eine Änderungseinrichtung (54) zum Ändern des ersten und/oder zweiten Sendesymbols unabhängig von einer Information, die durch das Informationssymbol repräsentiert ist.

23. Vorrichtung nach einem der Ansprüche 20 bis 22, bei der die Einrichtung (52, 54) zum Erzeugen mehr als zwei Sendesymbole erzeugt, die sich untereinander unterscheiden; und

bei der die Einrichtung (56) zum Modulieren mehr als zwei Sendesymbole auf jeweilige Träger moduliert; und

bei der die Einrichtung (62) zum Senden die mehr als zwei Sendesymbole zu jeweils unterschiedlichen Zeitpunkten sendet.

24. Vorrichtung nach einem der Ansprüche 20 bis 23, die ferner folgende Merkmale aufweist:

eine Differenz-Codiereinrichtung (10, 12, 14) zum Erzeugen von Differenzsymbolen zwischen den Sendesymbolen und den jeweils zeitlich vorausgehenden Sendesymbolen.

25. Vorrichtung nach einem der Ansprüche 20 bis 24, die ferner folgende Merkmale aufweisen:

eine Einrichtung (16) zum Zuordnen der zu modulierenden Symbole zu einem Phasenwert aus einer vordefinierten Anzahl (M) von Phasenwerten.

26. Vorrichtung nach einem der Ansprüche 20 bis 25, bei der die Einrichtung (56) zum Modulieren eine inverse schnelle Fouriertransformation zum parallelen Modulieren einer Vielzahl von Sendesymbolen bzw. Differenzsymbolen auf die Vielzahl von Trägern umfaßt, um ein MCM-Symbol zu erzeugen.

27. Vorrichtung nach einem der Ansprüche 20 bis 26, die ferner folgende Merkmale aufweist:

eine Kanalcodiereinrichtung (50) zum Faltungscodieren von Informationswörtern, um Bits für die Informationssymbole zu erzeugen.

28. Vorrichtung nach Anspruch 26 oder 27, die ferner folgende Merkmale aufweist:

eine Einrichtung (58) zum Einfügen eines Schutzintervalls zwischen zwei MCM-Symbole; und

eine Einrichtung (60) zum Einfügen einer Synchronisationssequenz, um einen MCM-Frame zu bilden.

29. Vorrichtung nach Anspruch 28, die ferner folgende Merkmale aufweist:

eine Einrichtung (62) zum Modulieren eines MCM-Frames auf einen HF-Träger; und

eine Antenne (62) zum Senden des modulierten HF-Trägers.

30. Vorrichtung zum Empfangen von Informationssymbolen, die mittels einer Mehrzahl von Trägern übertragen werden, wobei ein Informationssymbol durch ein erstes und ein zweites unterschiedliches Sendesymbol, die zu unterschiedlichen Zeitpunkten empfangen werden, dargestellt ist, mit folgenden Merkmalen:

einer Einrichtung (84) zum Demodulieren der modulierten Träger zu jeweiligen Zeitpunkten ($k_1$, $k_2$), um ein erstes und ein zweites empfangenes Sendesymbol zu erhalten; und

einer Einrichtung (90, 96; 96, 100) zum Verwenden der beiden empfangenen Sendesymbole, um das Informationssymbol, das den beiden empfangenen Sendesymbolen zugrunde liegt, zu ermitteln, indem festgestellt wird, welchem Informationssymbol der Informationssymbole das erste empfangene Sendesymbol und das vom ersten empfangenen Sendesymbol unterschiedliche zweite empfangene Sendesymbol zugeordnet sind.

31. Vorrichtung nach Anspruch 30, bei der die Einrichtung zum Verwenden ferner folgende Merkmale aufweist:

eine Differenz-Decodiereinrichtung (88, 90; 90, 92, 94) zum Bilden einer Phasendifferenz zwischen zwei zeitlich aufeinanderfolgende demodulierten empfangenen Sendesymbolen.

32. Vorrichtung nach Anspruch 31, bei der die Differenz-Decodiereinrichtung (90, 92, 94) eine Multiplikationseinrichtung (92), eine Verzögerungseinrichtung (90) und eine Einrichtung (94) zum Bilden eines konjugiert komplexen Wertes aufweist.

33. Vorrichtung nach Anspruch 31, bei der die Einrichtung zum Verwenden ferner folgende Merkmale aufweist:

eine Einrichtung (96a, 96b) zum Berechnen der Log-Likelihood-Ratios für die Multiplikationsergebnisse; und

eine Einrichtung (100) zum Kombinieren der Log-Likelihood-Ratios der Multiplikationsergebnisse, die sich auf die beiden empfangenen Sendesymbole beziehen, um das Informationssymbol zu erhalten.

34. Vorrichtung nach Anspruch 33, bei der die Einrichtung zum Kombinieren (100) angeordnet ist, um die Log-Likelihood-Ratios, die sich auf das erste und das zweite empfangene Sendesymbol beziehen, zu addieren, wobei die Vorrichtung ferner folgendes Merkmal aufweist:

eine Kanaldecodiereinrichtung (90), die einen Viterbi-Decodierer umfaßt.

35. Vorrichtung nach Anspruch 30, bei der ein Informationssymbol durch eine Differenz zwischen dem ersten Symbol und dem zeitlich vorausgehenden Sendesymbol sowie durch eine Differenz zwischen dem zweiten Sendesymbol und dem zeitlich vorausgehenden Sendesymbol übertragen wird, die ferner folgende Merkmale aufweist:

eine Einrichtung (86) zum Schätzen der Phase jedes empfangenen Sendesymbols; und

eine Einrichtung (88, 90) zum Bilden der Differenz zwischen der Phase des empfangenen Sendesymbols und der Phase des zeitlich vorausgehenden empfangenen Sendesymbols, um einen empfangenen Phasendifferenzwert für jedes Sendesymbol zu erhalten.

36. Vorrichtung nach Anspruch 35, bei der die Einrichtung zum Verwenden ferner folgende Merkmale aufweist:

eine Einrichtung (90) um Erhalten des Informationssymbols durch weiche Entscheidung aufgrund des empfangenen Phasendifferenzwerts mittels eines Viterbi-Algorithmus.

37. Vorrichtung nach Anspruch 35, bei der die Einrichtung zum Verwenden ferner folgende Merkmale aufweist:

eine Schwellenentscheidungseinrichtung zum Erhalten des Informationssymbols zum Vergleichen der empfangenen Phasendifferenzwerte für das erste und das zweite empfangene Sendesymbol mit einer harten Schwelle; und

eine Einrichtung zum Kombinieren der Ergebnisse der Schwellenentscheidungseinrichtung für das erste und das zweite empfangene Sendesymbol, um das Informationssymbol zu erhalten.

## Claims

1. Method for transmitting information symbols using a plurality of carriers, the method comprising the following steps:

generating (52, 54) a first transmission symbol from an information symbol;

generating (52, 54) a second transmission symbol from the same information symbol, the second transmission symbol being different to the first transmission symbol, wherein from each information symbol at least two transmission symbols differing from each other can be generated, these being clearly allocated to this information symbol, and wherein all transmission symbols, which can be generated from the individual transmission symbols differ from each other and from the information symbols;

modulating (56) the first transmission symbol on a carrier, and transmitting (62) the carrier modulated with the first transmission symbol at a first time ($k_1$); and

modulating the second transmission symbol on a carrier, and transmitting (62) the carrier modulated with the second transmission symbol at a second time ($k_2$), the second time being after the first time.

2. Method for transmitting information symbols using a plurality of carriers, comprising the following steps:

    generating (52, 54) a first transmission symbol from an information symbol;

    generating (52, 54) a second transmission symbol from the same information symbol, the second transmission symbol being different to the first transmission symbol, wherein from each information symbol at least two transmission symbols differing from each other can be generated, these being clearly allocated to this information symbol, and wherein all transmission symbols, which can be generated from the individual transmission symbols differ from each other and from the information symbols;

    generating (10, 12, 14) a difference between the first transmission symbol and a transmission symbol preceding the first transmission symbol in time, in order to obtain a first differential symbol;

    generating (10, 12, 14) a difference between the second transmission symbol and a transmission symbol preceding the second transmission symbol in time, in order to obtain a second differential symbol;

    modulating (56) the first differential symbol on a carrier, and transmitting (62) the carrier modulated with the first differential symbol at the first time ($k_1$); and

    modulating the second differential symbol on a carrier, and transmitting (62) the carrier modulated with the second differential symbol at a second time ($k_2$), the second time being after the first time.

3. Method in accordance with claim 1 or 2, in which the carrier modulated with the first transmission symbol or differential symbol differs from the carrier modulated with the second transmission symbol or differential symbol.

4. Method in accordance with one of the preceding claims, in which the period of time between the first time ($k_1$) and the second time ($k_2$) is so long that transmission with the carriers modulated with the two transmission symbols or differential symbols via a transmission channel are statistically independent of one another.

5. Method in accordance with one of the preceding claims, in which the first transmission can take one of a predefined number of phase states in the complex plane, and
in which the second transmission symbol takes the same phase state in the complex plane as the first transmission symbol, but has a different amplitude state.

6. Method in accordance with one of the claims 1 to 4,
in which the first transmission symbol can take one of a predefined number of phase states in the complex plane, and
in which the second transmission symbol takes a different phase state in the complex plane with respect to the first transmission symbol.

7. Method in accordance with claim 2, in which, in addition to the first and second transmission symbol, two further transmission symbols are transmitted at different times, the two transmission symbols having the same phase state from a number of four phase states in the complex plane, but having different amplitudes to each other taken from a number of four specified amplitudes.

8. Method in accordance with claim 7, in which phase allocation (16) to a binary symbol is carried out before the step of modulating (56), and in which the step of modulating (56) includes a step of inverse frequency transforming the plurality of phase shift-keyed carriers into the complex time domain.

9. Method in accordance with one of the preceding claims, in which N different carriers, N information symbols, N first transmission symbols and N second transmission symbols are present, in which a multi-carrier modulator symbol, MCM symbol, includes the result of an inverse Fourier transform of the N carriers incorporating the transmission symbols or differential symbols, and
in which an MCM frame exhibits a plurality of MCM symbols.

10. Method in accordance with claim 9, in which the N second transmission symbols corresponding to the N information symbols, are distributed in time over several MCM frames.

**11.** Method for receiving information symbols transmitted by means of a plurality of carriers, wherein an information symbol is represented by a first transmission symbol and a second different transmission symbol, which are received at different times, wherein each information symbol can be represented by at least two transmission symbols differing from each other, these being clearly allocated to this information symbol, and wherein all transmission symbols, which can represent the individual information symbols differ from each other and from the information symbols, comprising the following steps:

    demodulating (84) a first carrier, in order to obtain the first received transmission symbol at a time $(k_1)$;

    storing (98) the first received transmission symbol, or of information which refers to the first received transmission symbol;

    demodulating (84) a further carrier at a second time $(k_2)$, in order to obtain a second received transmission symbol, and

    using the stored first received transmission symbol or the information which refers to the first received transmission symbol and the second received transmission symbol, in order to determine the information symbol, on which the two received transmission symbols are based, by ascertaining to which information symbol from the information symbols the first received transmission symbol und the second received transmission symbol being different from the first received transmission symbol are allocated.

**12.** Method in accordance with claim 11, in which both carriers are different to one another.

**13.** Method in accordance with claim 11 or 12, in which the transmission symbols are differentially coded, one information symbol being represented by the difference between two transmission symbols adjacent to each other in time, which furthermore includes the following steps:

    estimating (86) phases of the first received transmission symbol and of one of the received transmission symbols preceding in time the first received transmission symbol;

    calculating the difference between the estimated phases, in order to obtain a first received phase difference referring to the information symbol;

    conducting the steps of estimating and calculating the difference for the second received transmission symbol, in order to obtain a second received phase difference referring to the same information symbol;

    carrying out a soft decision, based both on the first and second received phase differences, in order to obtain a first value and second values for the information symbol; and

    determining the information symbol using the first value and/or the second value.

**14.** Method in accordance with claim 13, in which, instead of the step of carrying out a soft decision, the following step is carried out:

    carrying out a hard decision, based both on the first and second received phase difference, in order to obtain a first value and a second value for the information symbol.

**15.** Method in accordance with claim 13 or 14, in which, in the step of determining, greater consideration is given to the value for which the amplitudes of the transmission symbols, on which its reception is based and from which the phase difference has been determined, are closer to a predetermined threshold.

**16.** Method in accordance with claim 11 or 12, in which the transmission symbols are differentially coded, wherein one information symbol is represented by the difference between two transmission symbols adjacent in time, which furthermore includes the following steps:

    multiplying a first received symbol by the conjugated complex value of a preceding received symbol;

multiplying a second received symbol by the conjugated complex value of its preceding received symbol;

calculating Log-Likelihood Ratios for each of the multiplication results; and

determining the information symbol from first and second Log-Likelihood Ratios.

17. Method in accordance with claim 16, in which, in the step of determining, the Log-Likelihood Ratios for which the multiplication result on which they are based has a higher magnitude are given more consideration.

18. Method in accordance with claim 16, in which, in the step of determining, the Log-Likelihood Ratios of both multiplication results are added, in order to obtain a Log-Likelihood Ratio for each bit of the information symbol.

19. Method in accordance with one of claims 16 to 18, in which the Log-Likelihood Ratios for the bits of the information symbol are passed to a Viterbi decoding algorithm, in order to determine the bits of the information symbol in the receiver.

20. Apparatus for transmission of information symbols by means of a plurality of carriers, comprising:

means (52, 54) for generating a first and a second transmission symbol, based on s single information symbol, wherein the first and second transmission symbols differ from one another, wherein from each information symbol at least two transmission symbols differing from each other can be generated, these being clearly allocated to this information symbol, and wherein all transmission symbols, which can be generated from the individual transmission symbols differ from each other and from the information symbols;

means (56) for modulating the first and second transmission symbols on a first and second carrier; and

means (62) for transmitting the modulated first transmission symbol at a first time ($k_1$), and the modulated second transmission symbol at a second time ($k_2$), wherein the second time is after the first time.

21. Apparatus in accordance with claim 20 in which the first carrier and the second carrier differ from one another.

22. Apparatus in accordance with claim 20 or 21, in which the device (52, 54) for generating the first and second transmission symbols further comprises:

grouping means (52) for grouping a plurality of bits, in order to form an information symbol; and

modifying means (54) for changing the first and/or second transmission symbol independently of information represented by the information symbol.

23. Apparatus in accordance with one of the claims 20 to 22, in which the means (52, 54) for generating generates more than two transmission symbols differing from each other,
in which the means for modulating (56) modulates more than two transmission symbols of the respective carriers, and
in which the means for transmitting (62) transmits the more than two transmission symbols, each at different times.

24. Apparatus in accordance with one of claims 20 to 23, which furthermore comprises:

differential coding means (10, 12, 14) for generating differential symbols between the transmission symbols and respective transmission symbols which precede the transmission symbols in time.

25. Apparatus in accordance with claims 20 to 24, which furthermore comprises:

means (16) for allocating the symbols to be modulated to one phase value from a predefined number (M) of phase values.

26. Apparatus in accordance with one of claims 20 to 25, in which the modulating means (56) include an inverse, Fast Fourier Transform for parallel modulation of a plurality of transmission symbols or differential symbols onto a plurality of carriers, in order to generate an MCM symbol.

**27.** Apparatus in accordance with one of claims 20 to 26, which furthermore comprises:

> channel coding means (50) for convolution coding of information words, in order to generate bits for the information symbols.

**28.** Apparatus in accordance with claims 26 or 27, which furthermore comprises:

> means (58) for inserting a protection interval between the two MCM symbols, and

> means (60) for inserting a synchronisation sequence, in order to form an MCM frame.

**29.** Apparatus in accordance with claim 28, which furthermore comprises:

> means (62) for modulating an MCM frame on an RF carrier, and

> an aerial (62) for transmitting the modulated RF carrier.

**30.** Apparatus for the reception of information symbols, which are transmitted by means of a plurality of carriers, wherein an information symbol is represented by a first and a second transmission symbol, each being different from the other, which are received at different times, comprising:

> means (84) for demodulating the modulated carriers at respective times ($k_1$, $k_2$), in order to obtain a first and second received transmission symbol, and

> means (90, 96; 96, 100) for using the two received transmission symbols, in order to determine the information symbol on which the two received transmission symbols are based, by ascertaining to which information symbol from the information symbols the first received transmission symbol und the second received transmission symbol being different from the first received transmission symbol are allocated.

**31.** Apparatus in accordance with claim 30, in which the means for using further comprises:

> differential decoding means (88, 90; 90, 92, 94) for forming a phase difference between two successive demodulated received transmission symbols following each other in time.

**32.** Apparatus in accordance with claim 31, in which the differential decoding means (90, 92, 94) includes multiplication means (92), delaying means (90), and means (94) for forming a conjugated complex value.

**33.** Apparatus in accordance with claim 31, in which the means for using furthermore comprises:

> means (96a, 96b) for calculating the Log-Likelihood Ratios for multiplication results, and

> means (100) for combining the Log-Likelihood Ratios for the multiplication results, which relate to the two received transmission symbols, in order to obtain the information symbol.

**34.** Apparatus in accordance with claim 33, in which the means for combining (100) is arranged so as to add the Log-Likelihood Ratios based on the first and second received transmission symbols, wherein the apparatus furthermore comprises:

> channel decoding means (90), which includes a Viterbi decoder.

**35.** Apparatus in accordance with claim 30, in which an information symbol is transmitted via a difference between the first symbol and the transmission symbol preceding it in time, and via a difference between the second transmission symbol and the transmission symbol preceding this in time, the apparatus furthermore comprising:

> means (86) for estimating the phase of each received transmission symbol, and

> means (88, 90) for forming the difference between the phase of the received transmission symbol and the phase of the received transmission symbol before this, in order to obtain a received phase difference value for each transmission symbol.

**36.** Apparatus in accordance with claim 35, in which the device for using furthermore comprises:

means (90) for obtaining the information symbol via a soft decision, based on the received phase difference value, by means of a Viterbi algorithm.

**37.** Apparatus in accordance with claim 35, in which the device for using furthermore comprises:

threshold deciding means for obtaining the information symbol for comparing the received phase difference values for the first and second received transmission symbols, with a hard threshold, and

means for combining the results of the threshold deciding means for the first and second received transmission symbols, in order to obtain the information symbol.

## Revendications

**1.** Procédé pour envoyer des symboles d'information au moyen d'une pluralité de porteuses, aux étapes suivantes consistant à:

générer (52, 54) un premier symbole d'envoi à partir d'un symbole d'information;
générer (52, 54) un second symbole d'envoi à partir d'un symbole d'information, le second symbole d'envoi étant différent du premier symbole d'envoi, à partir de chaque symbole d'information pouvant être générés au moins deux symboles d'envoi différents l'un de l'autre qui sont associés de manière univoque à ce symbole d'information et tous les symboles d'envoi pouvant être générés à partir des symboles d'information individuels étant différents l'un de l'autre et des symboles d'information ;
moduler (56) le premier symbole d'envoi sur une porteuse et envoyer (62), à un premier moment ($k_1$), la porteuse modulée avec le premier symbole d'envoi ; et
moduler (56) le second symbole d'envoi sur une porteuse et envoyer (62), à un second moment ($k_2$), la porteuse modulée avec le second symbole d'envoi, le second moment se situant, dans le temps, après le premier moment.

**2.** Procédé pour envoyer des symboles d'information au moyen d'une pluralité de porteuses, aux étapes suivantes consistant à:

générer (52, 54) un premier symbole d'envoi à partir d'un symbole d'information;
générer (52, 54) un second symbole d'envoi à partir d'un symbole d'information, le second symbole d'envoi étant différent du premier symbole d'envoi, à partir de chaque symbole d'information pouvant être générés au moins deux symboles d'envoi différents l'un de l'autre qui sont associés de manière univoque à ce symbole d'information et tous les symboles d'envoi pouvant être générés à partir des symboles d'information individuels étant différents l'un de l'autre et des symboles d'information ;
générer (10, 12, 14) une différence entre le premier symbole d'envoi et un symbole d'envoi le précédant dans le temps, pour obtenir un premier symbole de différence ;
générer (10, 12, 14) une différence entre le second symbole d'envoi et un symbole d'envoi le précédant dans le temps, pour obtenir un second symbole de différence ;
moduler (56) le premier symbole de différence sur une porteuse et envoyer (62) à un premier moment ($k_1$) la porteuse modulée avec le premier symbole de différence ; et
moduler (56) le second symbole de différence sur une porteuse et envoyer (62) à un second moment ($k_2$) la porteuse modulée avec le second symbole de différence, le second moment se situant, dans le temps, après le premier moment.

**3.** Procédé selon la revendication 1 ou 2, dans lequel la porteuse modulée avec le premier symbole d'envoi ou symbole de différence est différent de la porteuse modulée avec le second symbole d'envoi ou symbole de différence.

**4.** Procédé selon l'une des revendications précédentes, dans lequel le laps de temps compris entre le premier moment ($k_1$) et le second moment ($k_2$) est d'une longueur telle que les transmissions des porteuses modulées avec les deux symboles d'envoi ou symboles de différence par un canal de transmission sont statistiquement indépendantes l'une de l'autre.

**5.** Procédé selon l'une des revendications précédentes, dans lequel le premier symbole d'envoi peut adopter l'un parmi un nombre prédéfini d'états de phase dans le plan complexe, et

dans lequel le second symbole d'envoi adopte le même état de phase dans le plan complexe que le premier symbole d'envoi, mais présente un état d'amplitude différent.

**6.** Procédé selon l'une des revendications 1 à 4, dans lequel le premier symbole d'envoi peut adopter l'un parmi un nombre prédéfini d'états de phase dans le plan complexe, et

dans lequel le second symbole d'envoi adopte un autre état de phase dans le plan complexe que le premier symbole d'envoi.

**7.** Procédé selon la revendication 2, dans lequel, outre le premier et le second symbole d'envoi, il est transmis, à des moments différents, deux autres symboles d'envoi ayant le même état de phase parmi un nombre de quatre états de phase dans le plan complexe, mais des amplitudes différentes l'une de l'autre parmi chaque fois quatre amplitudes prédéterminées.

**8.** Procédé selon la revendication 7, dans lequel est réalisée, avant l'étape de modulation (56), une attribution de phase (16) à un symbole binaire, et dans lequel l'étape de modulation (56) comporte l'étape de la transformation de fréquence inverse de la pluralité de porteuses à décalage de phase dans la plage de temps complexe.

**9.** Procédé selon l'une des revendications précédentes, dans lequel sont présents N porteuses différentes, N symboles d'information, N premiers symboles d'envoi et N seconds symboles d'envoi, dans lequel un symbole de modulation par porteuses multiples, symbole MPM, comporte le résultat d'une transformation de Fourier inverse des N porteuses auxquelles sont appliqués les symboles d'envoi ou les symboles de différence, et

dans lequel une fenêtre MPM présente une pluralité de symboles MPM.

**10.** Procédé selon la revendication 9, dans lequel les N seconds symboles d'envoi, qui correspondent aux N symboles d'informatiôn, sont répartis dans le temps sur plusieurs fenêtres MPM.

**11.** Procédé pour recevoir des symboles d'information émis au moyen d'une pluralité de porteuses, un symbole d'information étant représenté par un premier et un second symbole d'envoi différents reçus à des moments différents, chaque symbole d'information pouvant être représenté par au moins deux symboles d'envoi différents l'un de l'autre associés de manière univoque à ce symbole d'information, et tous les symboles d'envoi pouvant représenter les symboles d'information individuels étant différents l'un de l'autre et des symboles d'information, aux étapes suivantes consistant à:

démoduler (84) une première porteuse, pour obtenir un premier symbole d'envoi reçu à un premier moment $(k_1)$;
mémoriser le premier symbole d'envoi reçu ou les informations renvoyant au premier symbole d'envoi reçu ;
démoduler (84) une autre porteuse à un second moment $(k_2)$, pour obtenir un second symbole d'envoi reçu ; et
utiliser le premier symbole d'envoi reçu mémorisé ou les informations renvoyant au premier symbole d'envoi reçu et le second symbole d'envoi reçu, pour déterminer le symbole d'information sur lequel se basent les deux symboles d'envoi reçus, symbole d'information parmi les symboles d'information auquel sont associés le premier symbole d'envoi reçu et le second symbole d'envoi reçu différent du premier symbole d'envoi reçu.

**12.** Procédé selon la revendication 11, dans lequel l'une porteuse et l'autre porteuse sont différentes l'une de l'autre.

**13.** Procédé selon la revendication 11 ou 12, dans lequel les symboles d'envoi sont codés par différence, un symbole d'information étant représenté par une différence entre deux symboles d'envoi adjacents dans le temps, présentant, par ailleurs, les étapes suivantes consistant à:

estimer (86) les phases du premier symbole d'envoi reçu et d'un symbole d'envoi reçu précédant le premier symbole d'envoi reçu dans le temps ;
former la différence entre les phases estimées, pour obtenir une première différence de phase reçue renvoyant au symbole d'information ;
réaliser les étapes d'estimation et de formation de la différence pour le second symbole d'envoi reçu, pour obtenir une seconde différence de phase reçue renvoyant au même symbole d'information ;
réaliser une décision douce sur base tant de la première que de la seconde différence de phase reçues, pour obtenir une première et une seconde valeur du symbole d'information ; et
déterminer le symbole d'information à partir de la première et/ou de la seconde valeur.

**14.** Procédé selon la revendication 13, dans lequel, au lieu de l'étape de réalisation d'une décision douce, il est réalisé l'étape suivante consistant à:

réaliser une décision dure sur base tant de la première que de la seconde différence de phase reçues, pour obtenir une première et une seconde valeur du symbole d'information.

**15.** Procédé selon la revendication 13 ou 14, dans lequel, à l'étape de détermination, il est tenu compte dans une plus grande mesure de la valeur, dans lequel les amplitudes des symboles d'envoi lui servant de base et à partir desquels a été déterminée la différence de phase se situaient plus près d'un seuil prédéterminé.

**16.** Procédé selon la revendication 11 ou 12, dans lequel les symboles d'envoi sont codés par différence, un symbole d'information étant représenté par une différence entre deux symboles d'envoi adjacents dans le temps, présentant, par ailleurs, l'étape suivante consistant à:

multiplier un premier symbole de réception par la valeur complexe conjuguée d'un symbole de réception précédent dans le temps ;
multiplier un second symbole de réception par la valeur complexe conjuguée de son symbole de réception précédent dans le temps ;
calculer les rapports de "log-likelihood" pour chacun des résultats de multiplication ; et
déterminer le symbole d'information à partir du premier et du second rapport de "log-likelihood".

**17.** Procédé selon la revendication 16, dans lequel, à l'étape de détermination, il est tenu compte dans une plus grande mesure des rapports de "log-likelihood" dont le résultat de multiplication sur lequel ils se basent a une valeur plus élevée.

**18.** Procédé selon la revendication 16, dans lequel, à l'étape de détermination, les rapports de "log-likelihood" des deux résultats de multiplication sont additionnés, pour obtenir, pour chaque bit du symbole d'information, un rapport de "log-likelihood".

**19.** Procédé selon l'une des revendications 16 à 18, dans lequel les rapports de "log-likelihood" pour les bits du symbole d'information sont amenés à un algorithme de décodage de Viterbi, pour déterminer les bits du symbole d'information dans le récepteur.

**20.** Dispositif pour envoyer des symboles d'information au moyen d'une pluralité de porteuses, aux caractéristiques suivantes:

un dispositif (52, 54) destiné à générer un premier et un second symbole d'envoi sur base d'un seul symbole d'information, le premier et le second symbole d'envoi étant différents l'un de l'autre, à partir de chaque symbole d'information pouvant être générés au moins deux symboles d'envoi différents l'un de l'autre qui sont associés de manière univoque à ce symbole d'information et tous les symboles d'envoi pouvant être générés à partir des symboles d'information individuels étant différents l'un de l'autre et des symboles d'information ;
un dispositif (56) destiné à moduler le premier et le second symbole d'envoi sur une première et sur une seconde porteuse ; et
un dispositif (62) destiné à envoyer le premier symbole d'envoi modulé à un premier moment ($k_1$) et le second symbole d'envoi modulé à un second moment ($k_2$), le second moment se situant, dans le temps, après le premier moment.

**21.** Dispositif selon la revendication 20, dans lequel la première porteuse et la seconde porteuse sont différentes l'une de l'autre.

**22.** Dispositif selon la revendication 20 ou 21, dans lequel le dispositif (52, 54) de génération présente, par ailleurs, les caractéristiques suivantes:

un dispositif de groupement (52) destiné à regrouper une pluralité de bits, pour former un symbole d'information ; et

un dispositif de modification (54) destiné à modifier le premier et/ou le second symbole d'envoi indépendamment d'une information représentée par le symbole d'information.

23. Dispositif selon l'une des revendications 20 à 22, dans lequel le dispositif (52, 54) de génération génère plus de deux symboles d'envoi différents l'un de l'autre ; et

dans lequel le dispositif (56) de modulation module plus de deux symboles d'envoi sur les porteuses respectives ; et

dans lequel le dispositif (62) d'envoi envoie les plus de deux symboles d'envoi à des moments différents l'un de l'autre.

24. Dispositif selon l'une des revendications 20 à 23, présentant, par ailleurs, les caractéristiques suivantes:

un dispositif de codage par différence (10, 12, 14) destiné à générer des symboles de différence entre les symboles d'envoi et chacun des symboles d'envoi précédent dans le temps.

25. Dispositif selon l'une des revendications 20 à 24, présentant, par ailleurs, les caractéristiques suivantes:

un dispositif (16) destiné à associer les symboles à moduler à une valeur de phase parmi un nombre prédéfini (M) de valeurs de phase.

26. Dispositif selon l'une des revendications 20 à 25, dans lequel le dispositif (56) de modulation comporte une transformation de Fourier rapide inverse pour moduler en parallèle une pluralité de symboles d'envoi ou de symboles de différence sur la pluralité de porteuses, afin de générer un symbole MPM.

27. Dispositif selon l'une des revendications 20 à 26, présentant, par ailleurs, les caractéristiques suivantes:

un dispositif de codage de canal (50) destiné à coder par pliage des mots d'information, pour générer des bits pour les symboles d'information.

28. Dispositif selon la revendication 26 ou 27, présentant, par ailleurs, les caractéristiques suivantes

un dispositif (58) destiné à insérer un intervalle de protection entre deux symboles MPM ; et
un dispositif (60) destiné à insérer une séquence de synchronisation, pour former une fenêtre MPM.

29. Dispositif selon la revendication 28, présentant, par ailleurs, les caractéristiques suivantes :

un dispositif (62) destiné à moduler une fenêtre MPM sur une porteuse HF ; et
une antenne (62) destinée à envoyer la porteuse HF modulée.

30. Dispositif pour recevoir des symboles d'information transmis au moyen d'une pluralité de porteuses, un symbole d'information étant représenté par un premier et un second symbole d'envoi différents reçus à des moments différents, aux caractéristiques suivantes:

un dispositif (84) destiné à démoduler les porteuses modulées à des moments respectifs ($k_1$, $k_2$), pour obtenir un premier et un second symbole d'envoi reçu ; et
un dispositif (90, 96 ; 96, 100) destiné à utiliser les deux symboles d'envoi reçus, pour déterminer le symbole d'information sur lequel se basent les deux symboles d'envoi reçus, en établissant celui parmi les symboles d'information auquel est associé le premier symbole d'envoi reçu et le second symbole d'envoi reçu différent du premier symbole d'envoi reçu.

31. Dispositif selon la revendication 30, dans lequel le dispositif d'utilisation présente, par ailleurs, les caractéristiques suivantes :

un dispositif de décodage par différence (88, 90 ; 90, 92, 94) destiné à former une différence de phase entre deux symboles d'envoi reçus démodulés successifs dans le temps.

**32.** Dispositif selon la revendication 31, dans lequel le dispositif de décodage par différence (90, 92, 94) présente un dispositif de multiplication (92), un dispositif de temporisation (90) et un dispositif (94) de formation d'une valeur complexe conjuguée.

**33.** Dispositif selon la revendication 31, dans lequel le dispositif d'utilisation présente, par ailleurs, les caractéristiques suivantes:

un dispositif (96a, 96b) destiné à calculer les rapports de "log likelihood" pour les résultats de multiplication ; et un dispositif (100) destiné à combiner les rapports de "log likelihood" se référant aux deux symboles d'envoi reçus, pour obtenir le symbole d'information.

**34.** Dispositif selon la revendication 33, dans lequel le dispositif de combinaison (100) est disposé de manière à additionner les rapports de "log likelihood" se référant au premier et au second symbole d'envoi reçu, le dispositif présentant, par ailleurs, la caractéristique suivante:

un dispositif de décodage de canal (90) comportant un décodeur de Viterbi.

**35.** Dispositif selon la revendication 30, dans lequel un symbole d'information est transmis par une différence entre le premier symbole et le symbole d'envoi précédent dans le temps ainsi que par une différence entre le second symbole d'envoi et le symbole d'envoi précédent dans le temps, présentant, par ailleurs, les caractéristiques suivantes:

un dispositif (86) destiné à estimer la phase de chaque symbole d'envoi reçu ; et un dispositif (88, 90) destiné à former la différence entre la phase du symbole d'envoi reçu et la phase du symbole d'envoi reçu précédent dans le temps, pour obtenir une valeur de différence de phase reçue pour chaque symbole d'envoi.

**36.** Dispositif selon la revendication 35, dans lequel le dispositif d'utilisation présente, par ailleurs, les caractéristiques suivantes:

un dispositif (90) destiné à obtenir le symbole d'information par une décision douce sur base de la valeur de différence de phase à l'aide d'un algorithme de Viterbi.

**37.** Dispositif selon la revendication 35, dans lequel le dispositif d'utilisation présente, par ailleurs, les caractéristiques suivantes:

un dispositif de décision de seuil destiné à obtenir le symbole d'information, afin de comparer les valeurs de différence de phase reçues pour le premier et le second symbole d'envoi reçus avec un seuil dur ; et un dispositif destiné à combiner les résultats du dispositif de décision de seuil pour le premier et le second symbole d'envoi reçus, pour obtenir le symbole d'information.

Fig. 1

Fig. 2

Fig. 3

Fig. 4

**Fig. 5**

**Fig. 6**

Fig. 7

Fig. 8

EP 1 092 305 B1

98

Speicher

100

Metrik-
kombination

Kanal-
decodierer

90

96a | 1. Metrik-
berechn.

96b | 2. Metrik-
berechn.

$k_1$

$k_2$

Zeit

## Fig. 9

100a

90,92,94

66

70

$\lambda^{(0)}[k_1,...,k_2...]$

$\lambda^{(0)}[k_1]+$
$\lambda^{(0)}[k_2]$

$\lambda^{(0)}[k]$

$r[k_1,...,k_2...]$

Differenz-
Decodierer

Re

Im

$\lambda^{(1)}[k_1,...,k_2...]$

$\lambda^{(1)}[k_1]+$
$\lambda^{(1)}[k_2]$

$\lambda^{(1)}[k]$

68

72

100b

## Fig. 10

EP 1 092 305 B1

## Fig. 11

```
        52              54             53a                        53b        10,12,14
                                              b¹ b⁰ c⁰
  ┌─────────┐  b¹ b⁰  ┌─────────┐ b¹ b⁰ c¹ ┌──────┐              ┌──────┐  ┌──────────┐
  │         │────────▶│         │──────────▶│ S/P  │─────────────▶│ P/S  │─▶│ Differenz-│
  │ Mapper1 │         │ Mapper2 │           │ 1:2  │              │ 2:1  │  │ .codierer │
  │         │         │         │           │  b¹ b⁰ c¹ ┌──────┐ │      │  └──────────┘
  └─────────┘         └─────────┘           │      │─▶│ Zeit- │─▶│      │
                                            └──────┘   │inter- │  └──────┘
                                                       │leaver │
                                                       └───────┘
                                                          55
```

## Fig. 12

```
        64            65            96a              98                    100
  ┌───────────┐    ┌──────┐   ┌──────────┐    ┌──────────┐         ┌──────────────────┐  λ⁽⁰⁾(k)
  │ Differenz-│───▶│ S/P  │──▶│ λ⁽ˡ⁾(k₁) -│──▶│ Speicher │────────▶│                  │─────▶
  │ Decodierer│    │ 1:2  │   │ Berechnung│    └──────────┘         │ Σ(λˡ(k₁),λˡ(k₂)) │
  │           │    │      │   └──────────┘                         │                  │  λ⁽¹⁾(k)
  └───────────┘    │      │─▶┌──────────┐   ┌──────────┐  ┌──────────┐│                  │─────▶
                   └──────┘  │ Zeit-     │─▶│ λ⁽ˡ⁾(k₂) -│─▶│          │└──────────────────┘
                             │deinter-   │  │ Berechnung│  └──────────┘
                             │leaver     │  └──────────┘
                             └──────────┘        96b
                                  97
```